(19) **Europäisches Patentamt / European Patent Office / Office européen des brevets**

(11) **EP 2 495 552 A1**

(12) # EUROPEAN PATENT APPLICATION
published in accordance with Art. 153(4) EPC

(43) Date of publication:
**05.09.2012 Bulletin 2012/36**

(51) Int Cl.:
***G01N 21/892*** (2006.01)

(21) Application number: **10826466.4**

(22) Date of filing: **29.09.2010**

(86) International application number:
**PCT/JP2010/066934**

(87) International publication number:
**WO 2011/052332 (05.05.2011 Gazette 2011/18)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.10.2009 JP 2009251107**

(71) Applicant: **Sumitomo Chemical Co., Ltd**
**Chuo-ku, Tokyo 104-8260 (JP)**

(72) Inventor: **HIROSE Osamu**
**Imabari-shi**
**Ehime 799-1523 (JP)**

(74) Representative: **Jackson, Martin Peter**
**J A Kemp**
**14 South Square**
**Gray's Inn**
**London WC1R 5JJ (GB)**

(54) **IMAGE PROCESSING DEVICE FOR DEFECT INSPECTION AND IMAGE PROCESSING METHOD FOR DEFECT INSPECTION**

(57)      An image processing device for defect inspection and others are realized as those capable of detecting various types of defects with different changes of ray paths caused thereby, at once and with sufficient accuracy.

An image processing device for defect inspection (image analyzer) 6 is a device to process image data taken continually in time from a moving molded sheet with an area camera 5, which is provided with a data extraction unit 11 to extract line data at an identical position from each of different image data, for a plurality of different positions on the image data; a data storage unit 13 to arrange the plurality of line data in time series for each of the positions on the image data to generate a plurality of line-composited image data; a change amount calculation unit 15 to perform a differential operator operation on the plurality of line-composited image data to generate a plurality of emphasized image data; an identical position judgment/extraction unit 16 to extract data indicating an identical position of the molded sheet from the plurality of emphasized image data; and an integration unit 17 to accumulate, at respective pixels, brightness values of the extracted emphasized image data to generate defect inspection image data.

**Fig.1**

EP 2 495 552 A1

## Description

### Technical Field

The present invention relates to a defect inspection system for inspection of a defect in a specimen such as a sheet-like specimen, and to an imaging device for defect inspection, an image processing device for defect inspection, an image processing program for defect inspection, a computer-readable recording medium storing the image processing program for defect inspection, and an image processing method for defect inspection, which are used in the defect inspection system.

### Background Art

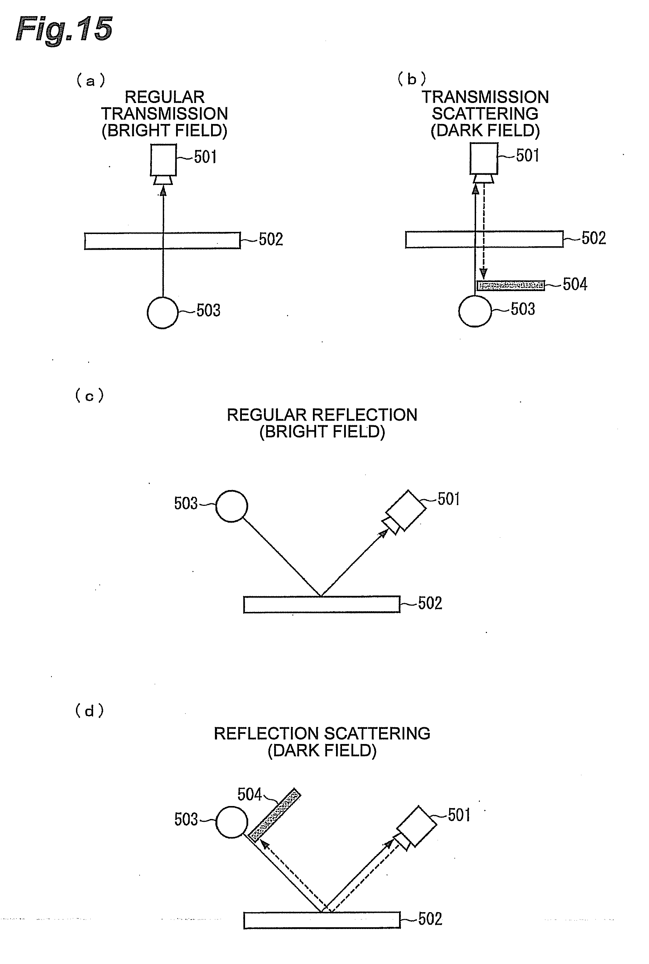

In general, when inspecting a defect in a sheet-like specimen, methods for detection of the defect in the specimen by illuminating the specimen with light and measuring and analyzing light transmitted or reflected thereby are frequently employed. These methods are generally classified into four groups, as shown in Fig. 15, by arrangement of an optical system of a defect inspection device.

The arrangement of the optical system shown in Fig. 15 (a) is one called the regular transmission method and the arrangement of the optical system shown in Fig. 15 (b) one called the transmission scattering method. In general, the methods to measure transmitted light, such as the regular transmission method and the transmission scattering method, are used in inspection of specimen 502 with high light transmittance. The arrangement of the optical system shown in Fig. 15 (c) is one called the regular reflection method and the arrangement of the optical system shown in Fig. 15 (d) one called the reflection scattering method. In general, the methods to measure reflected light, such as the regular reflection method and the reflection scattering method, are used in inspection of specimen 502 with low light transmittance.

A method of arranging a line sensor 501 on the optical axis of light emitted from a light source 503 and measuring non-scattered light (regularly transmitted light or regularly reflected light) from the specimen 502 with the line sensor 501, as in the regular transmission method and the regular reflection method, is also called a bright field method. On the other hand, a method of arranging the line sensor 501 with a shift from the optical axis of the light emitted from the light source 503, placing a light shield (knife edge) 504 between the light source 503 and the specimen 502 so as to prevent non-scattered light from the specimen 502 from directly entering the line sensor 501, focusing the line sensor 501 on an edge of the light shield 504, and measuring scattered light (scattered transmitted light or scattered reflected light) from the specimen 502 with the line sensor 501, as in the transmission scattering method and the reflection scattering method, is also called a dark field method or optical-axis shift method. In the dark field method or optical-axis shift method, it is also possible to omit the light shield 504 and arrange the line sensor 501 so as to prevent non-scattered light from the specimen 502 from directly entering the line sensor 501.

In the bright field method, the light from the light source 503 is scattered by a defect in the specimen 502, thereby to decrease the light quantity of non-scattered light received by the line sensor 501. In the bright field method, the presence or absence of a defect in the specimen 502 is determined from an amount of the decrease (change) of the light received by the line sensor 501. Since the bright field method has low detection sensitivity, it is a method suitable for detection of relatively large defects with a large amount of the decrease. Since it is easier to arrange the optical system compared to the dark field method, the operation is stabler and practical implementation thereof is easier.

On the other hand, in the dark field method, the line sensor 501 receives light scattered by a defect in the specimen 502 and the presence/absence of defect in the specimen 502 is determined from the quantity of received light. The dark field method has higher detection sensitivity of defect and allows detection of smaller unevenness (defect) than the bright field method does. However, practical implementation thereof is limited because it is necessary to highly accurately arrange the optical system (line sensor 501, light source 503, and light shield 504).

In general, because large defects in a specimen can be visually recognized, the defect inspection apparatus is needed to be able to detect small defects. For this reason, it is often the case that the dark field method is applied to the defect inspection apparatus.

However, the dark field method has the problem that it is difficult to accurately inspect the defect of the specimen, because it is difficult to arrange the optical system in practice as described above.

Patent Literature 1 discloses the technology to solve this problem. In the technology disclosed in Patent Literature 1, an appropriate size of the light shield to arrangement of the optical system is defined in order to highly accurately detect the presence/absence of defect in the specimen.

**Citation List**

**Patent Literatures**

Patent Literature 1: Japanese Patent Application Laid-open No. 2007-333563 (laid open on December 27, 2007)
Patent Literature 2: Japanese Patent Application Laid-open No. 2008-292171 (laid open on December 4, 2008)

**Summary of Invention**

**Technical Problem**

However, how the ray path is changed by the defect of the specimen differs depending upon the type of the defect (the size or the like) and therefore the appropriate arrangement of the optical system (the positional relation between the light source and the light receiving device or the like) and the appropriate size of the light shield are practically different depending upon the type of the defect (the size or the like). Patent Literature 1 also describes that it is necessary to locate the linear transmission illumination device and the light receiving means closer to each other, in order to detect the defect with small optical strain (cf. Paragraph [0009]). For this reason, the aforementioned conventional technology has the problem that it is difficult to inspect various types of defects with different changes of ray paths caused by the defects, at once and with sufficient accuracy. In the case of the defect inspection apparatus using the dark field method, because it is necessary to highly accurately arrange the optical system as described above, it is practically difficult to change the arrangement of the optical system and the size of the light shield according to the type of the defect. For this reason, the defect inspection apparatus using the conventional dark field method is operated by selecting and using the arrangement of the optical system and the size of the light shield capable of detecting specific types of relatively often-existing defects, and thus the apparatus has the problem that there are cases where it fails to detect some types of defects with sufficient accuracy.

The present invention has been accomplished in view of the above problem and it is an object of the present invention to realize a defect inspection system capable of detecting various types of defects with different changes of ray paths caused by the defects, at once and with sufficient accuracy and to realize an imaging device for defect inspection, an image processing device for defect inspection, an image processing program for defect inspection, a computer-readable recording medium storing the image processing program for defect inspection, and an image processing method for defect inspection, which are used in the defect inspection system.

**Solution to Problem**

In order to achieve the above object, an image processing device for defect inspection according to the present invention is an image processing device for defect inspection, which is configured to process image data of two-dimensional images of a specimen taken continually in time by an imaging unit in a state of relative movement between the specimen and the imaging unit, thereby to generate defect inspection image data for inspection of a defect in the specimen, the image processing device comprising: identical line extraction means which extracts line data of one line at an identical position on the image data from each of a plurality of different image data; and line composition means which arranges the line data extracted by the identical line extraction means, in time series to generate line-composited image data of a plurality of lines, wherein the identical line extraction means is means that extracts each of the line data at a plurality of different positions on the image data, wherein the line composition means is means that arranges the line data extracted by the identical line extraction means, in time series for each of the positions on the image data to generate a plurality of different line-composited image data, the image processing device further comprising: operator operation means which performs an operation using an operator to emphasize brightness change, on each of the plurality of line-composited image data to generate a plurality of emphasized image data of one line or a plurality of lines; and integration means which accumulates, at respective pixels, brightness values of the plurality of emphasized image data indicating an identical position of the specimen to generate the defect inspection image data.

In order to achieve the above object, an image processing method for defect inspection according to the present invention is an image processing method for defect inspection, which is configured to process image data of two-dimensional images of a specimen taken continually in time by an imaging unit in a state of relative movement between the specimen and the imaging unit, thereby to generate defect inspection image data for inspection of a defect in the specimen, the image processing method comprising: an identical line extraction step of extracting line data of one line at an identical position on the image data from each of a plurality of different image data; and a line composition step of arranging the line data extracted in the identical line extraction step, in time series to generate composited image data of a plurality of lines, wherein the identical line extraction step is a step of extracting each of the line data at a plurality of different positions on the image data, wherein the line composition step is a step of arranging the line data extracted in the identical line extraction step, in time series for each of the positions on the image data to generate a plurality of different line-composited image data, the image processing method further comprising: an operator operation step of performing an operation using an operator to emphasize brightness change, on each of the plurality of line-composited image data to generate a plurality of emphasized image data of one line or a plurality of lines; and an integration step of accumulating, at respective pixels, brightness values of the plurality of emphasized image data indicating an identical position of the specimen to generate the defect inspection image data.

In the foregoing configuration, the line data of one line at the identical position on the image data is extracted from each of the plurality of different image data in the two-dimensional images of the specimen taken continually in time by the imaging unit, and this extraction process is carried out similarly for a plurality of different positions on the image data. Then the extracted line data are arranged in time series for each of the positions on the image data to generate the plurality of different line-composited image data, each of which is composed of a plurality of lines. Since the specimen and the imaging unit are in relative movement, the plurality of different line-composited image data correspond to image data taken at respective different imaging angles for the specimen. Therefore, by generating the aforementioned line-composited image data, the plurality of image data taken at the different imaging angles for the specimen can be obtained without change in the imaging angle of the imaging unit to the specimen. Therefore, it becomes feasible to obtain the line-composited image data taken at the plurality of imaging angles optimal for inspection of each of various types of defects with different changes of ray paths caused by the defects. For this reason, the present invention achieves the effect of detecting various types of defects on the specimen with different changes of ray paths caused by the defects, at once and with sufficient accuracy, by reference to the plurality of line-composited image data. Without need for high accuracy of arrangement of the optical system, the defect can be accurately detected because any one of the plurality of line-composited image data obtained becomes equivalent to image data obtained with accurate arrangement of the optical system.

In the foregoing configuration, the operator operation means performs the operation using the operator to emphasize brightness change, on each of the plurality of line-composited image data, to generate each of the emphasized image data of one line or a plurality of lines. For this reason, the brightness change is emphasized at each pixel of the plurality of line-composited image data and thus it becomes easier to detect a small defect, a thin defect, or a faint defect.

In the above configuration, the defect inspection image data is generated by accumulating, at respective pixels, the brightness values of emphasized image data in the plurality of emphasized image data indicating the identical position of the specimen. The integration allows reduction in noise.

There are no particular restrictions on the method of obtaining the plurality of emphasized image data indicating the identical position of the specimen, but examples of applicable methods include the following methods: (1) a method of, prior to the foregoing identical line extraction, specifying each of the line data indicating the identical position from the plurality of different image data, adding an identifier indicative of the identical position to each line data, and, after the aforementioned operator operation and before the foregoing integration, extracting the plurality of emphasized image data indicating the identical position of the specimen from the plurality of emphasized image data, based on the identifier; (2) a method of, prior to the aforementioned identical line extraction, specifying each of the line data indicating the identical position from the plurality of different image data, adding an identifier indicative of the identical position to each line data, extracting the plurality of line-composited image data indicating the identical position of the specimen from the plurality of line-composited image data on the basis of the identifier, after the line composition and before the operator operation, and performing the aforementioned operator operation on the plurality of extracted line-composited image data indicating the identical position of the specimen, to generate the plurality of emphasized image data indicating the identical position of the specimen; (3) a method of, after the aforementioned operator operation and before the integration, specifying and extracting each of the emphasized image data indicating the identical position from the plurality of different emphasized image data; (4) a method of, after the line composition and before the operator operation, specifying and extracting each of the emphasized image data indicating the identical position from the plurality of different line-composited image data, and performing the operator operation on the plurality of extracted line-composited image data indicating the identical position of the specimen, to generate the plurality of emphasized image data indicating the identical position of the specimen; and so on.

The image processing device for defect inspection according to the present invention is preferably configured as follows: the operator operation means is means that performs an operation using a differential operator on the plurality of line-composited image data to calculate gradients of brightness values along a direction perpendicular to a center line, at respective pixels on the center line of the plurality of line-composited image data, and that replaces the brightness values of the respective pixels on the center line of the plurality of line-composited image data with absolute values of the gradients of brightness values at the respective pixels to generate new emphasized image data of one line.

In the foregoing configuration, the operator operation means performs the operation using the differential operator on the plurality of line-composited image data to calculate the gradients of brightness values along the direction perpendicular to the center line, at the respective pixels on the center line of the plurality of line-composited image data, and the operator operation means replaces the brightness values of the respective pixels on the center line of the plurality of line-composited image data with the absolute values of gradients of brightness values at the respective pixels to generate the new emphasized image data of one line. Since the brightness values are handled as absolute values, the gradients of brightness values, either positive or negative, can be processed without distinction as data indicating a defect. Namely, a defect reflected on the bright side and a defect reflected on the dark side can be handled in the same manner, which allows accurate detection of the defect without need for high accuracy of arrangement of the optical system. Furthermore, since the defect inspection image data is generated by accumulating, at respective pixels, the brightness values of the plurality of emphasized image data, the addition can be performed without canceling out the data indicating the defect. For this reason, it is feasible to detect even a defect an image of which appears either on the bright side or on the dark side depending upon the arrangement of the optical system (it is empirically known that there are a lot of such defects in practice).

The image processing device for defect inspection according to the present invention is preferably configured as follows: the integration means is means that accumulates the brightness values of the emphasized image data at respective pixels, for each of positions of the specimen from the plurality of emphasized image data indicating the respective positions of the specimen, to generate a plurality of defect inspection image data indicating the respective positions of the specimen; the device further comprises: image generation means which arranges the plurality of defect inspection image data indicating the respective positions of the specimen, corresponding to the positions of the specimen to composite new defect inspection image data.

In the above configuration, the image generation means arranges the plurality of defect inspection image data corresponding to the positions of the specimen to composite the new defect inspection image data. Since there is the correspondence between the positions of the defect inspection image data composited by the image generation means and the positions of the specimen, it becomes feasible to readily detect where the defect exists in the whole specimen.

The image processing device for defect inspection according to the present invention is preferably configured as follows: the integration means accumulates, at respective pixels, the brightness values of the plurality of emphasized image data indicating the identical position of the specimen for each of positions of the specimen in order from a leading position of the specimen, at every imaging by the imaging unit, to generate a plurality of defect inspection image data indicating the respective positions of the specimen.

In the foregoing configuration, the integration means accumulates, at respective pixels, the brightness values of the plurality of emphasized image data indicating the identical position of the specimen, for each of the positions of the specimen in order from the leading position of the specimen, at every imaging by the imaging unit, to generate the plurality of defect inspection image data indicating the respective positions of the specimen. For this reason, the defect inspection image data can be generated from the emphasized image data, at every imaging by the imaging unit. Since the image for discrimination of the presence/absence of defect can be outputted per frame, the defect inspection can be performed in real time.

An imaging device for defect inspection according to the present invention comprises: the aforementioned image processing device for defect inspection; and an imaging unit which takes two-dimensional images of the specimen continually in time in a state of relative movement between the specimen and the imaging unit.

In the foregoing configuration, since the imaging device comprises the aforementioned image processing device for defect inspection, the imaging device for defect inspection can be provided as one capable of detecting various types of defects with different changes of ray paths caused by the defects, at once and with sufficient accuracy.

A defect inspection system according to the present invention is a defect inspection system for inspection of a defect in a specimen, which comprises the foregoing imaging device for defect inspection, and movement means for implementing the relative movement between the specimen and the imaging unit.

In the foregoing configuration, since the system comprises the imaging device for defect inspection, the defect inspection system can be provided as one capable of detecting various types of defects with different changes of ray paths caused by the defects, at once and with sufficient accuracy.

The defect inspection system according to the present invention comprises: a light source which illuminates the specimen with light; and a light shield which blocks part of the light traveling toward the imaging unit after having been emitted from the light source and transmitted or reflected by the specimen, and the defect inspection system inspects the defect in the specimen by a dark field method.

In the foregoing configuration, since various optical conditions in a process of transition from a bright field state to a dark field state are included in an observation region, the defect can be detected with good sensitivity and a small defect can be detected, when compared to the cases using the dark field method or the bright field method singly. Furthermore, the foregoing configuration does not require accurate arrangement of the optical system, different from the defect inspection system using the conventional dark field method requiring highly accurate arrangement of the optical system.

The image processing device for defect inspection may be implemented by a computer, and in this case, the computer is made to operate as each of the means of the image processing device for defect inspection, whereby a control program to realize the aforementioned image processing device for defect inspection by the computer, and a computer-readable recording medium storing it are also embraced in the scope of the present invention.

**Advantageous Effects of Invention**

As described above, the present invention allows a plurality of data to be obtained as data taken at different imaging angles for an identical position of a specimen. For this reason, the present invention achieves the effect of detecting various types of defects on the specimen, by reference to the plurality of data.

**Brief Description of Drawings**

Fig. 1 is a functional block diagram showing a configuration of major part in an image analyzer as an image processing unit forming a defect inspection system according to an embodiment of the present invention.

Fig. 2 is a drawing showing the positional relationship of an optical system for defect inspection including a linear light source and a knife edge, wherein (a) is a perspective view thereof and (b) a drawing showing a yz plane thereof.

Fig. 3 is a schematic diagram showing a schematic configuration of a defect inspection system according to an embodiment of the present invention.

Fig. 4 is a drawing showing a process of line composition, wherein (a) is a conceptual diagram showing time-series arrangement of 480 images taken by an area camera, (b) a drawing showing a state in which the 480 image data (#1 to #480) are horizontally arranged in order from the left, and (c) a drawing showing a state in which Nth lines are extracted and arranged from the 480 image data.

Fig. 5 includes (a) a drawing showing an image taken by an area camera and (b) a drawing showing a line-composited image composited by extracting lines near the knife edge from the 480 image data taken by the area camera.

Fig. 6 is a drawing showing an example of image processing, wherein (a) is an original image obtained by line composition, (b) an image obtained by performing a $7 \times 7$ vertical differential filter process on the image shown in (a), and (c) a binarized image according to a fixed threshold by the Laplacian histogram method on the image shown in (b).

Fig. 7 is a drawing showing an operation flow of each part in the image analyzer in RT-LCI (Real Time Line Composition and Integration: the details of which will be described later) processing.

Fig. 8a is a drawing showing an outline of the RT-LCI processing, which is a state transition diagram showing states of image data stored in respective memory units and an image displayed on a display unit, for each of frames.

Fig. 8b is a drawing showing an outline of the RT-LCI processing, which is a schematic diagram showing a relation between an imaging range of the area camera and a specimen.

Fig. 8c is a drawing showing an outline of the RT-LCI processing, which is a diagram showing a process of generating first-generated RT-LCI data.

Fig. 9 is a drawing showing an example of line data stored in a second memory unit, a differential operator used by a change amount calculation unit, and values of brightness data calculated by the change amount calculation unit.

Fig. 10 is a drawing schematically showing states in which deviation of optical axis occurs depending upon the thickness or warpage of a specimen.

Fig. 11 shows examples, wherein (a) is a drawing showing an example of an image taken by the area camera and (b) a drawing showing an example of an RT-LCI image obtained by the defect inspection system according to an example of the present invention.

Fig. 12 shows examples, wherein (a) is a drawing showing an example of an image taken by the area camera, (b) a drawing showing an example of a line-composited image, and (c) a drawing showing an example of an RT-LCI image obtained by the defect inspection system according to an example of the present invention.

Fig. 13 shows examples, wherein (a) is a drawing showing an example of an image taken by the area camera, (b) a drawing showing an example of a line-composited image, and (c) a drawing showing an example of an RT-LCI image obtained by the defect inspection system according to an example of the present invention.

Fig. 14 shows examples, wherein (a) is a drawing showing an example of an image taken by the area camera, (b) a drawing showing an example of a line-composited image, and (c) a drawing showing an example of an RT-LCI image obtained by the defect inspection system according to an example of the present invention.

Fig. 15 shows arrangement of an optical system in the defect inspection apparatus of the conventional technology, wherein (a) shows the arrangement of the optical system of the regular transmission method, (b) the arrangement of the optical system of the transmission scattering method, (c) the arrangement of the optical system of the regular reflection method, and (d) the arrangement of the optical system of the reflection scattering method.

**Description of Embodiments**

An embodiment of the present invention will be described below with reference to the drawings.

A defect inspection system according to the present embodiment is a system for detecting a defect in a molded sheet. The defect inspection system of the present embodiment is suitable for inspection of an optically-transparent molded sheet and, particularly, for inspection of a molded sheet made of a resin such as a thermoplastic resin. The molded sheet made of the resin can be, for example, a sheet molded by performing a treatment of passing a thermoplastic resin extruded from an extruder, through a gap between rolls to provide the resin with smoothness or glossiness and taking up the sheet by take-up rolls while cooling it on conveying rolls. Examples of thermoplastic resins applicable to the present embodiment include methacrylate resins, methyl methacrylate-styrene copolymers, polyolefin resins such as polyethylene or polypropylene, polycarbonate, polyvinyl chloride, polystyrene, polyvinyl alcohol, triacetylcellulose resins, and so on. The molded sheet may be comprised of only one of these thermoplastic resins or may be a lamination (laminated sheet) of two or more kinds of these thermoplastic resins. Furthermore, the defect inspection system of the present embodiment is suitably applicable to inspection of an optical film such as a polarizing film or a phase difference film and, particularly, to inspection of a long optical film stored and transported in a wound form like web. The molded sheet may be a sheet with any thickness; for example, it may be a relatively thin sheet generally called a film, or may be a relatively thick sheet generally called a plate.

Examples of defects in the molded sheet include point defects such as bubbles (e.g., those produced during molding), fish eyes, foreign objects, tire traces, hit marks, or scratches; knicks, stripes (e.g., those produced because of a difference of thickness), and so on.

When the various defects as described above are detected with a line sensor in the dark field method, it is considered that the line sensor is moved within a variation tolerance (generally, about several ten to several hundred μm) of an image pickup line of the line sensor. However, since the dark field method requires the highly accurate arrangement of the optical system as described above, it is difficult to detect the defect under the same conditions while changing the imaging line (imaging angle) of the line sensor bit by bit. Another conceivable method is to simultaneously scan a plurality of image pickup lines with a plurality of line sensors arranged in parallel, but the device system becomes complicated because of the arrangement of the plurality of line sensors and the optical system becomes needed to be arranged with higher accuracy.

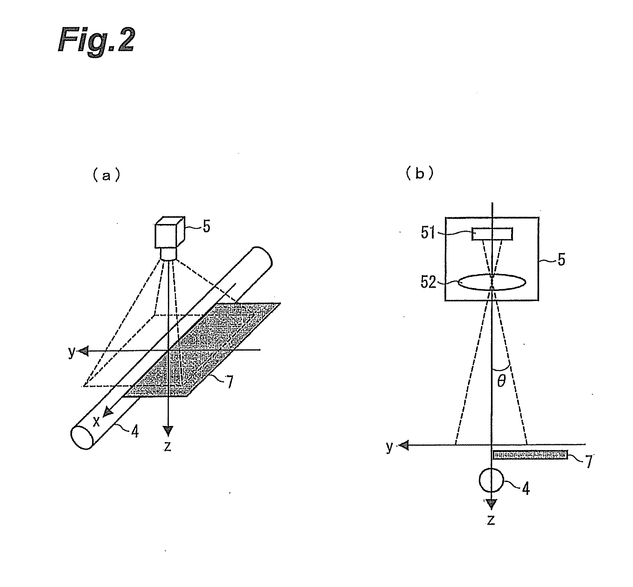

Then the inventor considered that under the paraxial condition an area camera could be used to scan under optical conditions equivalent to those with arrangement of several ten line sensors, for the following reason. The characteristics of the area camera under the paraxial condition will be described on the basis of Fig. 2. Fig. 2 is a drawing showing the positional relationship of an optical system for defect inspection including an area camera 5, a linear light source 4, and a knife edge 7. As shown in Fig. 2 (a), the area camera 5 is arranged above the linear light source 4 so that the center of the linear light source 4 is identical with a center of an imaging range, and the knife edge 7 is arranged so as to cover a half of the linear light source 4 when viewed from the area camera 5. Now, let us define an origin on the center of the linear light source 4, an X-axis along the longitudinal direction of the linear light source 4, a Y-axis along the transverse direction of the linear light source 4, and a Z-axis along a direction from the area camera 5 to the linear light source 4. Fig. 2 (b) is a view from the X-axis direction of Fig. 2 (a). The area camera 5 includes a CCD (Charge Coupled Device) 51 and a lens 52. If a half angle θ of an angel of imaging through the lens 52 by the CCD 51 is approximately within 0.1°, a difference between object distances in the range of the imaging by the CCD 51, $(1-\cos\theta)$, will be negligibly small. Specifically, in the case where the lens 52 has the focal length f of 35 mm, the distance between the lens 52 and a specimen is approximately 300 mm and, when the range of $\pm 7$ pixels centered on the X-axis is imaged using the area camera 5 with the resolution of 70 μm/pixel, the half angle θ of the imaging angle is given as follows:

$$\theta = \arctan(70 \ [\mu m/pixel] \times 10^3 \times 7 \ [pixel]/300 \ [mm]) \fallingdotseq 0.09$$

$$[degree].$$

Therefore, the difference between object distances is of $10^{-6}$ order, which is negligible. In this case, therefore, the imaging can be performed under the same optical conditions as in the case where fifteen line sensors (which consist of one line sensor on the X-axis and seven line sensors on either side thereof) each with the imaging range of 70 μm are used to perform imaging in parallel.

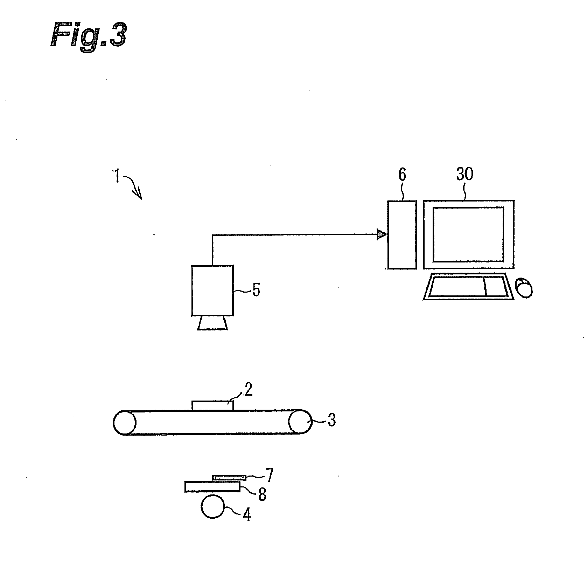

Next, a configuration of the defect inspection system 1 according to the present embodiment using the area camera 5 will be described below on the basis of Fig. 3. Fig. 3 is a schematic diagram schematically showing the defect inspection system 1.

As shown in Fig. 3, the defect inspection system 1 includes a conveyor (movement means) 3, the linear light source 4, the area camera (imaging unit) 5, an image analyzer (image processing device for defect inspection) 6, a display unit 30, the knife edge 7, and an illumination diffuser panel 8. A molded sheet 2 which is a specimen is placed on the conveyor 3. The defect inspection system 1 is configured as follows: while conveying the rectangular molded sheet 2 in a certain direction by the conveyor 3, the area camera 5 takes, continually in time, images of the molded sheet 2 illuminated with light from the linear light source 4, and the image analyzer 6 detects a defect of the molded sheet 2 on the basis of two-dimensional image data of the molded sheet 2 taken by the area camera 5.

The conveyor 3 is a device which conveys the rectangular molded sheet 2 in a direction perpendicular to its thickness direction, or, particularly, in the longitudinal direction of the sheet, so as to change the position illuminated with the linear light source 4, on the molded sheet 2. The conveyor 3 is provided with a feed roller and a take-up roller for conveying the molded sheet 2 in the fixed direction, and a conveyance speed thereof is measured with a rotary encoder or the like. The conveyance speed is set, for example, in the range of about 2 m to 12 m/min. The conveyance speed by the conveyor 3 is set and controlled by an unillustrated information processing device or the like.

The linear light source 4 is arranged so that the longitudinal direction thereof is a direction intersecting with the conveyance direction of the molded sheet 2 (e.g., a direction perpendicular to the conveyance direction of the molded sheet 2) and is arranged at the position opposite to the area camera 5 with the molded sheet 2 in between so that the light emitted from the linear light source 4 is incident through the molded sheet 2 into the area camera 5. There are no particular restrictions on the linear light source 4 as long as it emits the light without any effect on the composition and properties of the molded sheet 2; for example, the light source can be a fluorescent tube (particularly, a high-frequency fluorescent tube), a metal halide lamp, or a halogen linear light. It is also possible to adopt a configuration wherein the linear light source 4 is arranged opposite to the molded sheet 2 on the same side as the area camera 5 and wherein the linear light source 4 is arranged so that the light emitted from the linear light source 4 is reflected on the molded sheet 2 to enter the area camera 5 (cf. the arrangement of the optical system in the reflection scattering method shown in Fig. 15 (d)). The aforementioned configuration wherein the light reflected on the molded sheet 2 is incident into the area camera 5 is also applicable to inspection of defects in specimens of various shapes and materials, as well as the molded sheet 2.

The area camera 5 receives the light having traveled through the molded sheet 2 to take two-dimensional images of the molded sheet 2 continually in time. The area camera 5 outputs the data of the two-dimensional images of the molded sheet 2 thus taken, to the image analyzer 6. The area camera 5 consists of an area sensor which is composed of an imaging device such as a CCD or CMOS (Complementary Metal-Oxide Semiconductor) to take two-dimensional images. There are no particular restrictions on the area camera 5 as long as it can output multiple-tone image data; in the present embodiment it is one capable of outputting image data of an 8-bit gray scale (256 gray levels).

Since the size of the defect to be detected by the defect inspection system 1 is dependent upon the resolution of the area camera 5, the resolution of the area camera 5 is preferably selected in accordance with the size of the defect to be detected. The stereoscopic shape (ratio of width to height) of the defect to be detected by the defect inspection system 1 is fundamentally independent of the resolution of the area camera 5, and thus the camera resolution does not have to be selected depending upon the type of the defect to be detected.

The area camera 5 is preferably arranged so as to be able to take an image of the entire region in the width direction of the molded sheet 2 (which is a direction perpendicular to the conveyance direction of the molded sheet 2 and perpendicular to the thickness direction of the molded sheet 2). When the area camera 5 is arranged to take an image of the entire region in the width direction of the molded sheet 2, it is feasible to inspect the defect in the entire region of the molded sheet 2.

Imaging intervals (frame rate) of the area camera 5 do not always have to be fixed, but a user may be allowed to change the frame rate by manipulating the area camera 5 itself or by manipulating an information processing device (not shown; which may be omitted) connected to the area camera 5. The imaging intervals of the area camera 5 can be, for example, a fraction of one second which is a time duration of continuous shooting of a digital still camera, but the time duration can be made shorter by setting the number of lines in one frame to a requisite minimum with use of a partial imaging function which is usually provided in industrial CCD cameras. For example, in the case of cameras having effective pixels of 512 horizontal $\times$ 480 vertical pixels and 30 frames per second (hereinafter referred to as FPS) in readout of all pixels, some of them can implement readout at about 240 FPS by partial imaging of 512 horizontal $\times$ 60 vertical pixels. In another example, there are cameras having effective pixels of about 1600 horizontal $\times$ 1200 vertical pixels and the frame rate of 15 FPS in readout of all pixels; when such cameras are used and driven by partial scan of 1600 horizontal $\times$ 32 vertical pixels, some of them can implement readout at about 150 FPS. The effective pixels and driving method of the camera can be properly selected, for example, depending upon the conveyance speed of the specimen and the size of the detection target defect.

The image analyzer 6 is a device that receives the image data outputted from the area camera 5, performs image processing on the image data, thereby to generate defect inspection image data for inspection of a defect of the specimen, and outputs the defect inspection image data to the display unit 30. The image analyzer 6 is provided with a memory 20 to store image data, and an image processor 10 to perform the image processing on the image data. The area camera 5 and the image analyzer 6 constitute an imaging device for defect inspection. There are no particular restrictions on the image analyzer 6 as long as it can perform the image processing of two-dimensional image data; for example, it can be a PC (personal computer) with image processing software installed thereon, an image capture board equipped with an FPGA in which an image processing circuit is described, or a camera with a processor in which an image processing program is described (which is called an intelligent camera or the like). The details of the image processing performed by the image analyzer 6 will be described later.

The display unit 30 is a device that displays the defect inspection image data. The display unit 30 may be any unit that can display images or videos, and examples of the display unit 30 applicable herein include an LC (Liquid Crystal) display panel, a plasma display panel, an EL (Electro Luminescence) display panel, and so on. The image analyzer 6 or the imaging device for defect inspection may be configured with the display unit 30 therein. The display unit 30 may be provided as an external display device as separated from the defect inspection system 1, and the display unit 30 may be replaced by another output device, e.g., a printing device.

The knife edge 7 is a light shield of knife shape that blocks the light emitted from the linear light source 4.

The illumination diffuser panel 8 is a plate that diffuses light, in order to uniformize the light quantity of the light emitted from the linear light source 4.

The below will describe the circumstances of development of an algorithm utilized in the present embodiment. The algorithm utilized in the present embodiment is one having been developed in view of a problem of a defect detection method utilizing simple line composition described below.

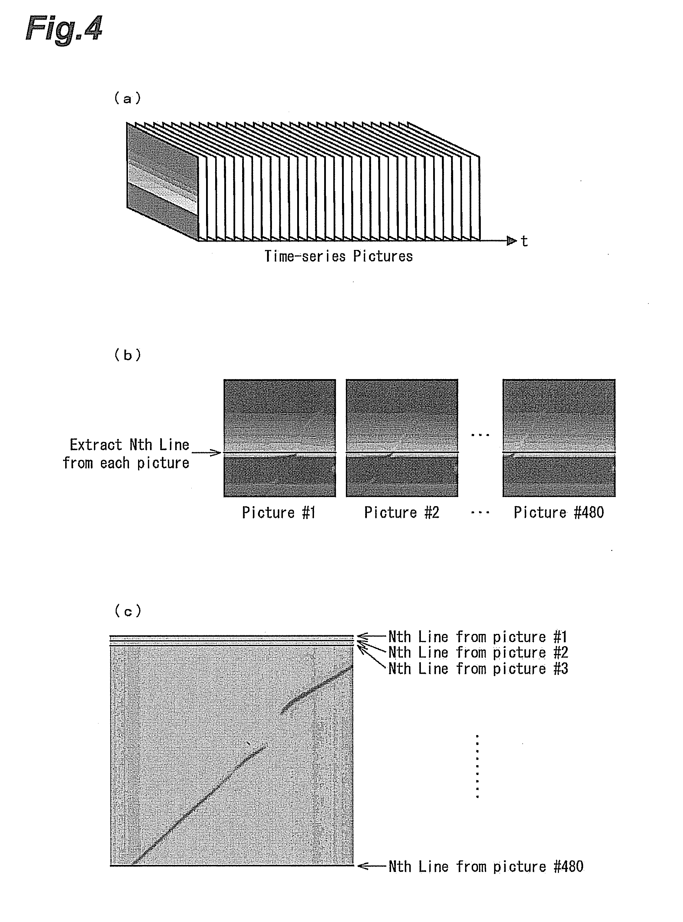

A method of line composition for generating images equivalent to images taken by a plurality of line sensors arranged in parallel, from a plurality of images taken by the area camera 5 will be described on the basis of Fig. 4. It is assumed herein that 480 images are obtained by taking with the area camera 5 having the frame rate of 60 FPS (Frame Per Second) for eight seconds. In the image data, each of partial images obtained by evenly dividing each image by at least one partition line along the width direction of the molded sheet 2 (direction perpendicular to the conveyance direction of the molded sheet 2 and perpendicular to the thickness direction of the molded sheet 2) will be referred to as a line. When it is assumed that the height of each entire image (size along the longitudinal direction of the molded sheet 2) is H pixels (H is a natural number) and that the width of each entire image (size along the width direction of the molded sheet 2) is W pixels (W is a natural number), the size of each line is H/L pixels in height (L is an integer of 2 or more) and W pixels in width.

A line is typically a partial image of one pixel $\times$ W pixels aligned on a straight line along the width direction of the molded sheet 2.

Fig. 4 (a) is a conceptual drawing showing the 480 images arranged in time series. Fig. 4 (b) is a drawing showing a state in which the 480 image data (#1 to #480) are arranged horizontally in order from the left. In each of the image data shown in Fig. 4 (b), the dark part in the bottom region is a position where the light is blocked by the knife edge 7, the bright part near the center is a position where the light from the linear light source 4 is transmitted, and the dark part in the top region is a position where the light from the linear light source 4 does not reach, which is out of an inspection target. The specimen is conveyed in the direction from bottom to top in Fig. 4 (b).

First, one line (red line shown in Fig. 4 (b): the Nth line) is extracted at the same position on the image data, from each of the image data of 480 images. The width of one line extracted at this time is a moving distance of the specimen per frame (1/60 sec). The lines thus extracted are arranged in an order from the top of the line extracted from the image data of #1, the line extracted from the image data of #2, ..., the line extracted from the image data of #480. Fig. 4 (c) is a drawing showing a state in which the Nth lines extracted from the respective 480 image data are arranged. When the extracted lines are arranged to composite one image data as shown in Fig. 4 (c), it is possible to generate an image equivalent to an image taken by a line sensor to scan the Nth line. This operation of extracting lines at the same position from a plurality of image data taken by the area camera 5 and generating the image equivalent to the image taken by the line sensor to scan the certain line will be referred to as line composition.

When the line composition is carried out by extracting the (N+1)th, the (N+2)th, the (N-1)th, and other lines, in addition to the Nth line, from each of the 480 image data, image data taken at a plurality of imaging angles (imaging positions) can be generated at once from the image data taken by the area camera 5. Namely, when the line composition is performed for the image data taken by the area camera 5, it is possible to generate a plurality of image data equivalent to image data at a plurality of imaging angles taken by an optical system in which a plurality of line sensors are arranged in parallel.

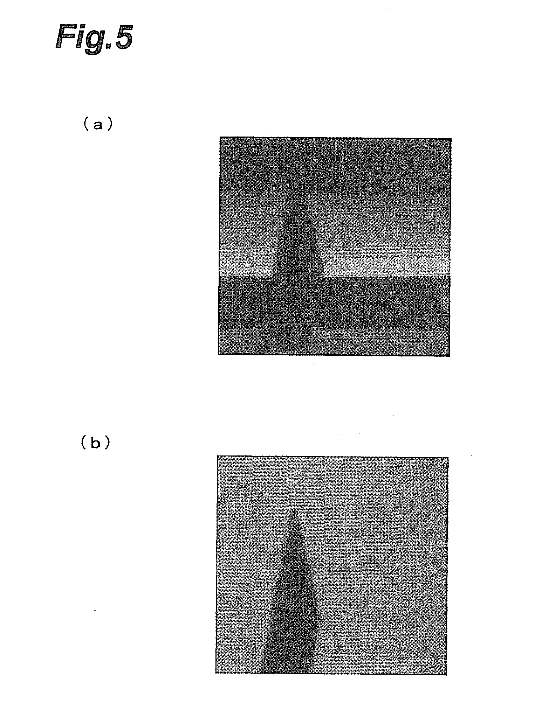

Next, a specific example of an image obtained by the line composition from 480 image data taken by the area camera 5 will be described below. Fig. 5 shows an image taken by the area camera 5 and an image obtained by the line composition from 480 image data taken by the area camera 5. Fig. 5 (a) is the image taken by the area camera 5. Fig. 5 (a) shows the image similar to those in Fig. 4 (b), in which the dark part in the bottom region is a position where the light is blocked by the knife edge 7, the bright part near the center is a position where the light from the linear light source 4 is transmitted, and the dark part in the top region is a position where the light from the linear light source 4 does not reach, which is out of an inspection target. The dark part projecting upward from the lower edge of Fig. 5 (a) is a shadow of an object placed as a mark. There is a defect in an area encircled by a white circle in Fig. 5 (a), but the defect cannot be visually recognized in the original image taken by the area camera 5.

Fig. 5 (b) is an image obtained by the line composition of extracting lines near the knife edge 7 from the 480 image data taken by the area camera 5. Specifically, it is a line-composited image obtained by extracting the lines at the position 210 $\mu$m apart toward the illumination side from the top edge of the knife edge 7. As is the case in Fig. 5 (a), the dark part projecting upward from the lower edge of Fig. 5 (b) is a shadow of the object placed as a mark. With reference to Fig. 5 (b), it is possible to visually recognize slight signs of stripes (bank marks) like a washboard. In this manner, the defect that cannot be visually recognized in the original image taken by the area camera 5 becomes visually recognizable by the line composition of the image data taken by the area camera 5.

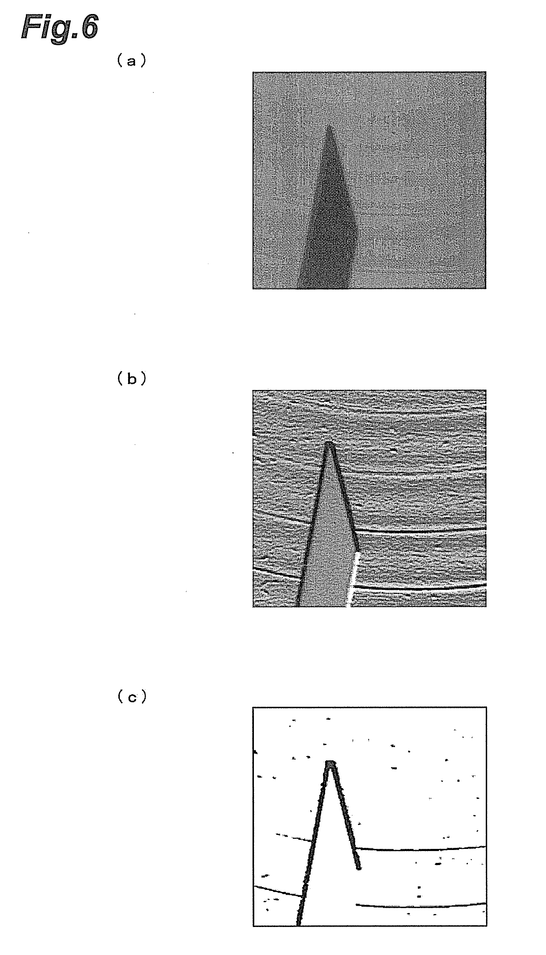

It is, however, difficult to clearly discriminate the defect in the line-composited image itself, and therefore image processing is performed on the line-composited image. Examples of the image processing include techniques as shown in Fig. 6. Fig. 6 (a) shows the original image obtained by the line composition, which is the same image as the image shown in Fig. 5 (b). Fig. 6 (b) is an image obtained by performing a $7\times7$ vertical differential filter process on the image shown in Fig. 6 (a). Fig. 6 (c) is a binarized image according to a fixed threshold by the Laplacian histogram method on the image shown in Fig. 6 (b). When the image processing is carried out on the line-composited image in this manner, the defect becomes more clearly distinguishable.

When the line composition is carried out on the image data taken by the area camera 5 in this manner, it is possible to simultaneously generate images under a plurality of different optical conditions, which are equivalent to images taken by the line sensor under a plurality of different optical conditions (imaging angles). Therefore, if an image showing the best view of the defect (image under an optimal optical condition; e.g., a line-composited image obtained by extracting the lines near the knife edge 7 as shown in Fig. 5 (b)) is selected, out of the plurality of generated images, and the defect inspection using the selected image is performed, it is possible to obtain the same result as that achieved when the defect detection is carried out using images taken by the line sensor under the optimal optical condition. Since it is easier to select an image showing the best view of the defect out of the plurality of images obtained by the line composition of image data taken by the area camera 5 than to move the position of the line sensor so as to achieve the optimal optical condition, implementation of the defect inspection becomes easier, so as to improve the efficiency of defect inspection.

Furthermore, when the image processing is performed on each of the generated line-composited images corresponding to the plurality of imaging angles and an image clearly showing the defect is selected and referenced out of the line-composited images subjected to the image processing, various defects of the specimen can be clearly recognized.

However, to manually select an image out of the line-composited images or out of the line-composited images subjected to the image processing is rather inefficient. When a specimen has a defect, it is desirable to distinguish in real time whether there is a defect in an imaging region of the specimen, in order to grasp which part of the specimen has the defect.

For this reason, the inventor developed the algorithm to create images allowing various defects of the specimen to be clearly distinguished in real time, using all of the generated line-composited images corresponding to the plurality of imaging angles, as a result of intensive and extensive research. This developed algorithm is called RT-LCI (Real Time Line Composition and Integration), and RT-LCI will be described below.

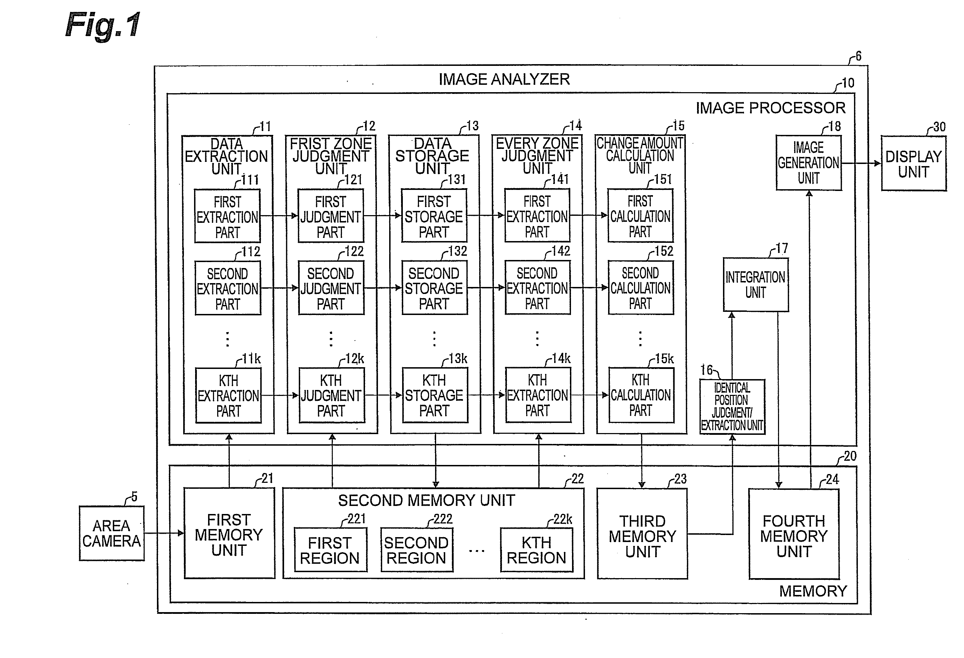

First, a configuration of each part of the image analyzer 6 to perform RT-LCI will be described on the basis of Fig. 1. Let us define k (k is an integer of 2 or more) as the number of imaging angles used in execution of the RT-LCI image processing. Furthermore, let m (m is a natural number) be the number of rows of a below-described differential operator.

The number k of imaging angles and the number m of rows of the differential operator can be optionally set and are preliminarily determined. For simplicity of description, a moving distance of the specimen 2 after taking of a certain image and before taking of a next image (during one frame duration) by the area camera 5 is defined as a movement width and a real distance (distance on the surface of the specimen 2) indicated by the width of line data (partial image data of one line) extracted by a below-described data extraction unit is assumed to be equal to the aforementioned movement width. Furthermore, the number of columns of the differential operator may be 2 or more, but it is assumed to be 1 herein.

Fig. 1 is a functional block diagram showing the configuration of major part of the image analyzer 6. As described above, the image analyzer 6 is provided with the image processor 10 and the memory 20. The image processor 10 has a data extraction unit (identical line extraction means) 11, a first zone judgment unit 12, a data storage unit (line composition means) 13, an every zone judgment unit 14, a change amount calculation unit (operator operation means) 15, an identical position judgment/extraction unit 16, an integration unit (integration means) 17, and an image generation unit (image generation means) 18. The memory 20 has a first memory unit 21, a second memory unit 22, a third memory unit 23, and a fourth memory unit 24. The second memory unit 22 is provided with a first region 221, a second region 222, and a kth region 22k. Each of the first region 221 to the kth region 22k is divided into m zones.

The data extraction unit 11 has a first extraction part 111, a second extraction part 112, ..., and the kth extraction part 11k. The first extraction part 111 is a part that extracts line data at a prescribed position (e.g., the lowermost line data) on the image data, from the image data stored in the first memory unit 21. Let us define the line data at the prescribed position extracted by the first extraction part 111, as first line data. The second extraction part 112 is a part that extracts line data (second line data) adjacent in the moving direction of the specimen 2 to the line data at the prescribed position on the image data. The kth extraction part is a part that extracts kth line data in the moving direction of the specimen 2 from the line data at the prescribed position on the image data. In summary, the data extraction unit 11 is a unit that extracts line data of one line at an identical position on the image data from each of a plurality of different image data and that extracts the foregoing line data at each of a plurality of different positions on the image data.

The first zone judgment unit 12 has a first judgment part 121, a second judgment part 122, ..., and a kth judgment part 12k. The first judgment part 121 is a part that judges whether there is line data already stored in the first zone of the first region 221 in the second memory unit 22. The second judgment part 122 is a part that judges whether there is line data already stored in the first zone of the second region 222 in the second memory unit 22. The kth judgment part 12k is a part that judges whether there is line data already stored in the first zone of the kth region 22k in the second memory unit 22.

The data storage unit 13 has a first storage part 131, a second storage part 132, ..., and a kth storage part 13k. The first storage part 131 is a part that, when the first judgment part 121 of the first zone judgment unit 12 judges that there is no line data in the first zone of the first region 221, stores the line data extracted by the first extraction part 111, into the first zone of the first region 221. On the other hand, when the first judgment part 121 of the first zone judgment unit 12 judges that there is line data in the first zone of the first region 221, the first storage part 131 moves up each of storage places of data stored in the respective zones of the first region 221, by one zone. Specifically, the line data stored in the first zone is moved into the second zone, and the line data stored in the (m-1)th zone is moved into the mth zone. At this time, if there is line data stored in the mth zone, the line data is discarded or moved to a backup place not shown. The first storage part 131, after moving the storage places of the line data stored in the respective zones, stores the line data extracted by the first extraction part 111, into the first zone of the first region 221. Furthermore, the first storage part 131, after the first extraction part 111 extracts a plurality of line data at the prescribed position on the image data, makes the plurality of extracted line data stored in consecutive zones of the first region 221, thereby compositing one line-composited image data from the plurality of extracted line data.

The second storage part 132, like the first storage part 131, stores the line data extracted by the second extraction part 112, into the first zone of the second region 222, based on a judgment made by the second judgment part 122 of the first zone judgment unit 12. Furthermore, after the second extraction part 112 extracts a plurality of line data at an identical position on the image data, the second storage part 132 makes the plurality of extracted line data stored in consecutive zones of the second region 222, thereby compositing one line-composited image data from the plurality of extracted line data.

The kth storage part 13k stores the line data extracted by the kth extraction part 11k, into the first zone of the kth region 22k, based on a judgment made by the kth judgment part 12k of the first zone judgment unit 12. After the kth extraction part 11k extracts a plurality of line data at an identical position on the image data, the kth storage part 13k makes the plurality of extracted line data stored in consecutive zones of the kth region 22k, thereby compositing one line-composited image data from the plurality of extracted line data.

In summary, the data storage unit 13 is a part that arranges the line data extracted by the data extraction unit 11, in time series to generate the line-composited image data of plural lines and that arranges the line data extracted by the data extraction unit 11, in time series, for each of the positions on the image data to generate a plurality of different line-composited image data.

The every zone judgment unit 14 has a first judgment part 141, a second judgment part 142, ..., and a kth judgment part 14k. The first judgment part 141 is a part that judges whether there are line data stored in all the zones (first to mth zones) of the first region 221. The second judgment part 142 is a part that judges whether there are line data stored in all the zones (first to mth zones) of the second region 222. The kth judgment part 14k is a part that judges whether there are line data stored in all the zones (first to mth zones) of the kth region 22k.

The change amount calculation unit 15 has a first calculation part 151, a second calculation part 152, ..., and a kth calculation part 15k. The first calculation part 151 is a part that, when the first judgment part 141 of the every zone judgment unit 14 judges that there are line data stored in all the zones, performs the differential operator operation on line-composited image data consisting of a plurality of line data stored in the first region 221 and stores emphasized image data obtained as the result of the operation (image data of one line or a plurality of lines) into the third memory unit 23. The second calculation part 152 is a part that, when the second judgment part 142 of the every zone judgment unit 14 judges that there are line data stored in all the zones, performs the differential operator operation on line-composited image data consisting of a plurality of line data stored in the second region 222 and stores emphasized image data obtained as the result of the operation (image data of one line or a plurality of lines), into the third memory unit 23. The kth calculation part 15k is a part that, when the kth judgment part 14k of the every zone judgment unit 14 judges that there are line data stored in all the zones, performs the differential operator operation on line-composited image data consisting of a plurality of line data stored in the kth region 22k and stores emphasized image data obtained as the result of the operation (image data of one line or a plurality of lines), into the third memory unit 23. The details of the arithmetic processing carried out by the change amount calculation unit 15 will be described later. In summary, the change amount calculation unit 15 performs the operation using the operator to emphasize brightness change, on each of the plurality of line-composited image data, thereby to generate each of the emphasized image data of one line or a plurality of lines.

The identical position judgment/extraction unit 16 judges whether there are emphasized image data of all imaging angles (k angles) indicating an identical position of the specimen 2, stored in the third memory unit 23. When the identical position judgment/extraction unit 16 judges that emphasized image data of all the imaging angles indicating an identical position are stored, it extracts each of the k types of emphasized image data.

The integration unit 17 accumulates, at respective pixels, brightness values of the k types of emphasized image data indicating an identical position of the specimen 2, which were extracted by the identical position judgment/extraction unit 16 to generate defect inspection image data (RT-LCI data) of one line or a plurality of lines. The integration unit 17 stores the position of the specimen 2 indicated by the k types of emphasized image data accumulated, in correspondence to the defect inspection image data as the result of the integration into the fourth memory unit 24.

The image generation unit 18 arranges each of the defect inspection image data stored in the fourth memory unit 24 in the same manner as the positional relation of the specimen 2, based on the positions of the specimen 2 stored in correspondence to each of the defect inspection image data in the fourth memory unit 24, to composite new defect inspection image data (RT-LCI data) and makes the composited defect inspection image data displayed as an image on the display unit 30.

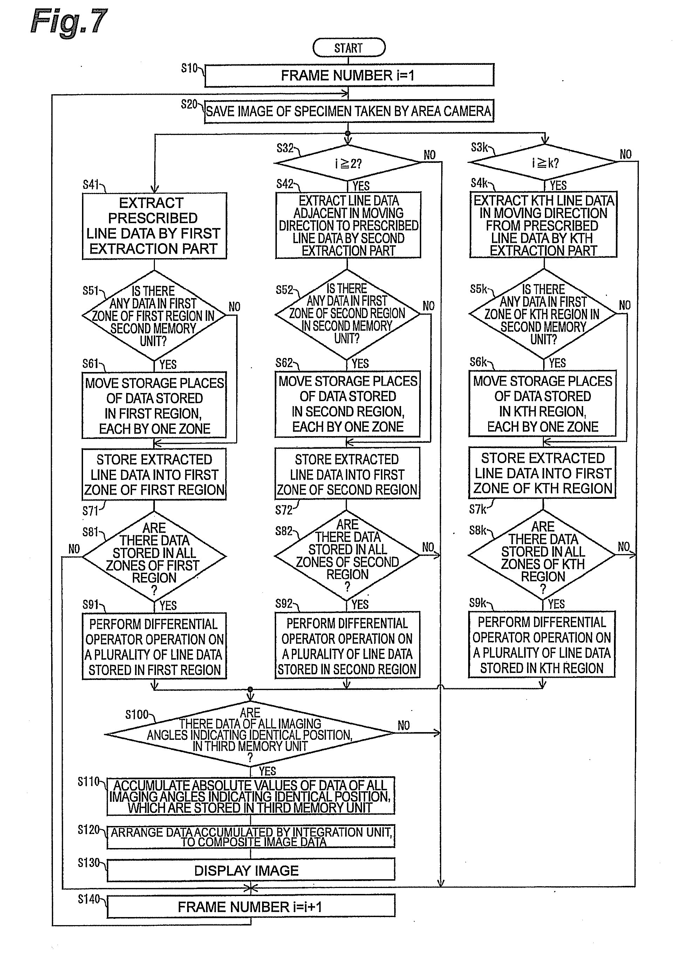

Next, operations of respective sections in the image analyzer 6 during execution of RT-LCI will be described on the basis of Fig. 7. Fig. 7 is a drawing showing an operation flow of each section in the image analyzer 6 during the RT-LCI processing.

First, with a start of the RT-LCI processing, the defect inspection system 1 sets the frame number i to i=1 (S10). While the specimen 2 is conveyed by the conveyor 3, the area camera 5 starts taking images thereof. The area camera 5 outputs the taken image data to the image analyzer 6 and the image analyzer 6 stores the image data into the first memory unit 21 (S20).

The first extraction part 111 extracts line data at a prescribed position (e.g., the first line data from the bottom) from the image data stored in the first memory unit 21 (S41). The first extraction part 111 makes the position of the specimen 2 indicated by the extracted line data, corresponding to the line data. For example, in the case where the movement width is equal to the width of the real distance indicated by the line data, the first extraction part 111 adds "pi" (where i is the frame number) as a sign indicative of the position of the specimen 2 to the extracted line data. The line data at the prescribed position is preliminarily optionally set so as to determine from which line the data should be extracted.

When $i \geq 2$ is met (YES in S32), the second extraction part 112 extracts line data adjacent in the moving direction of the specimen 2 to the line data at the prescribed position extracted by the first extraction part 111 (S42). The second extraction part 112 makes the position of the specimen 2 indicated by the extracted line data, corresponding to the line data. For example, in the case where the movement width is equal to the width of the real distance indicated by the line data, the second extraction part 112 adds "p(i-1)" as a sign indicative of the position of the specimen 2 to the extracted line data. If i=1 (NO) in S32, the flow proceeds to S 140.

When $i \geq k$ is met (YES in S3k), the kth extraction part 11k extracts the kth line data in the moving direction of the specimen 2 from the line data at the prescribed position extracted by the first extraction part 111 (S4k). The kth extraction part 11k makes the position of the specimen 2 indicated by the extracted line data, corresponding to the line data. For example, in the case where the movement width is equal to the width of the real distance indicated by the line data, the kth extraction part 11k adds "p(i-k+1)" as a sign indicative of the position of the specimen 2 to the extracted line data. When i < k (NO) in S3k, the flow proceeds to S 140.

Next, the first judgment part 121 of the first zone judgment unit 12 judges whether there is any line data already stored in the first zone of the first region 221 in the second memory unit 22 (S51). When the first judgment part 121 judges that there is line data in the first zone of the first region 221 (YES in S51), the first storage part 131 moves up each of storage places of line data stored in the respective zones of the first region 221, by one zone (S61). After completion of the movement of the storage places of line data stored in the respective zones, the first storage part 131 stores the line data extracted by the first extraction part 111, into the first zone of the first region 221 (S71). On the other hand, when the first judgment part 121 judges that there is no line data in the first zone of the first region 221 (NO in S51), the first storage part 131 stores the line data extracted by the first extraction part 111, into the first zone of the first region 221 (S71).

The second judgment part 122 of the first zone judgment unit 12 judges whether there is any line data already stored in the first zone of the second region 222 in the second memory unit 22 (S52). When the second judgment part 122 judges that there is line data in the first zone of the second region 222 (YES in S52), the second storage part 132 moves up each of storage places of line data stored in the respective zones of the second region 222, by one zone (S62). After completion of the movement of the storage places of line data stored in the respective zones, the second storage part 132 stores the line data extracted by the second extraction part 112, into the first zone of the second region 222 (S72). On the other hand, when the second judgment part 122 judges that there is no line data in the first zone of the second region 222 (NO in S52), the second storage part 132 stores the line data extracted by the second extraction part 112, into the first zone of the second region 222 (S72).

The kth judgment part 12k of the first zone judgment unit 12 judges whether there is any data already stored in the first zone of the kth region 22k in the second memory unit 22 (S5k). When the kth judgment part 12k judges that there is line data in the first zone of the kth region 22k (YES in S5k), the kth storage part 13k moves up each of storage places of line data stored in the respective zones of the kth region 22k, by one zone (S6k). After completion of the movement of the storage places of line data stored in the respective zones, the kth storage part 13k stores the line data extracted by the kth extraction part 11k, into the first zone of the kth region 22k (S7k). On the other hand, when the kth judgment part 12k judges that there is no line data in the first zone of the kth region 22k (NO in S5k), the kth storage part 13k stores the line data extracted by the kth extraction part 11k, into the first zone of the kth region 22k (S7k).

Next, the first judgment part 141 of the every zone judgment unit 14 judges whether there are line data stored in all the zones of the first region 221 (S81). When the first judgment part 141 of the every zone judgment unit 14 judges that there are line data stored in all the zones (YES in S81), the first calculation part 151 performs the differential operator operation on line-composited image data consisting of a plurality of line data stored in the first region 221 and stores emphasized image data obtained as the result of the operation, into the third memory unit 23 (S91). At this time, the sign indicative of the position of the specimen 2 made corresponding to the line data stored in the mth zone of the first region 221 is added to the emphasized image data as the result of the differential operator operation. On the other hand, when the first judgment part 141 judges that line data is not stored in all the zones (NO in S81), the flow proceeds to S140.

Furthermore, the second judgment part 142 of the every zone judgment unit 14 judges whether there are line data stored in all the zones of the second region 221 (S82). When the second judgment part 142 of the every zone judgment unit 14 judges that there are line data stored in all the zones (YES in S82), the second calculation part 152 performs the differential operator operation on line-composited image data consisting of a plurality of line data stored in the second region 222 and stores emphasized image data obtained as the result of the operation, into the third memory unit 23 (S92). At this time, the sign indicative of the position of the specimen 2 made corresponding to the line data stored in the mth zone of the second region 222 is added to the emphasized image data as the result of the differential operator operation. On the other hand, when the second judgment part 142 judges that line data is not stored in all the zones (NO in S82), the flow goes to S 140.

Furthermore, the kth judgment part 14k of the every zone judgment unit 14 judges whether there are line data stored in all the zones of the kth region 22k (S8k). When the kth judgment part 14k of the every zone judgment unit 14 judges that there are line data stored in all the zones (YES in S8k), the kth calculation part 15k performs the differential operator operation on line-composited image data consisting of a plurality of line data stored in the kth region 22k and stores emphasized image data obtained as the result of the operation, into the third memory unit 23 (S9k). At this time, the sign indicative of the position of the specimen 2 made corresponding to the line data stored in the mth zone of the kth region 22k is added to the emphasized image data as the result of the differential operator operation. On the other hand, when the kth judgment part 14k judges that line data is not stored in all the zones (NO in S8k), the flow goes to S140.

Next, the identical position judgment/extraction unit 16 judges whether emphasized image data of all the imaging angles (k types) indicating an identical position of the specimen 2 are stored, with reference to the signs indicative of the positions of the specimen 2 made corresponding to the emphasized image data stored in the third memory unit 23 (S100). When the identical position judgment/extraction unit 16 judges that emphasized image data of all the imaging angles indicating an identical position of the specimen 2 are not stored (NO in S100), the flow moves to S140. On the other hand, when the identical position judgment/extraction unit 16 judges that emphasized image data of all the imaging angles indicating an identical position of the specimen 2 are stored (YES in S100), it extracts the emphasized image data of the k types being all the imaging angles.

The integration unit 17 accumulates, at respective pixels, brightness values of the k types of emphasized image data extracted by the identical position judgment/extraction unit 16 (S110). The integration unit 17 stores in the fourth memory unit, the sign indicative of the position of the specimen 2 made corresponding to the k types of emphasized image data thus accumulated, in correspondence to defect inspection image data (RT-LCI data) as the result of the integration. The image generation unit 18 arranges the RT-LCI data stored in the fourth memory unit, in the same manner as the positional relation of the specimen 2, based on the signs indicative of the positions of the specimen 2 made corresponding to the respective RT-LCI data stored in the fourth memory unit, to composite new defect inspection image data (RT-LCI data) (S120). Then the image generation unit 18 makes the arranged RT-LCI data displayed on the display unit 30 (S130). After the image generation unit 18 makes the RT-LCI data displayed on the display unit 30, an increment is given to the frame number i, i=i+1, and the flow returns to S20.

When the real time line composition and integration (RT-LCI) processing is carried out on the image data taken by the area camera 5 as described above, accumulated images of scattering optic images at a plurality of imaging angles can be obtained continually.

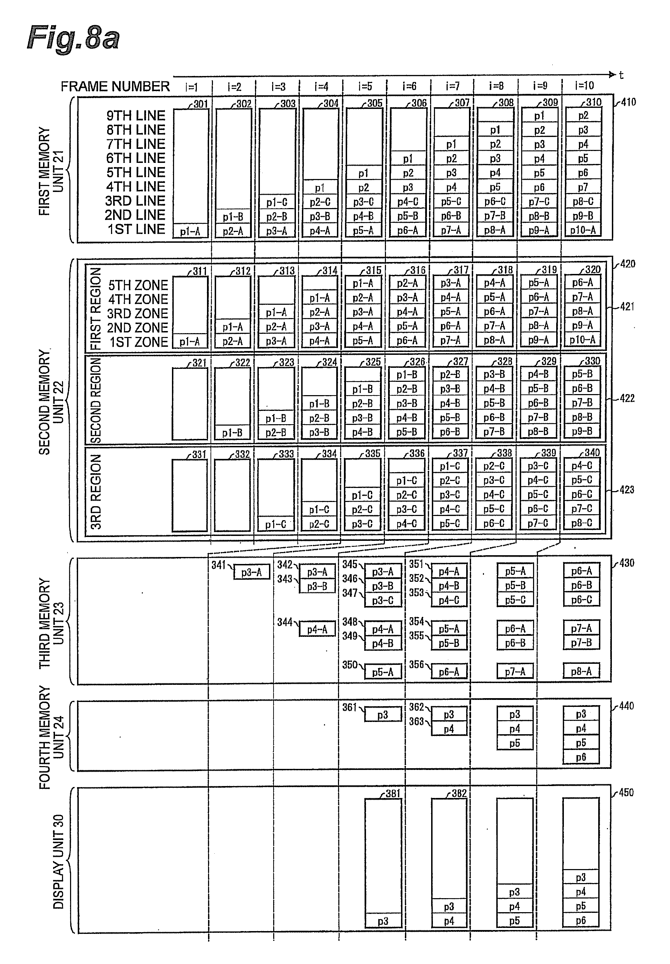

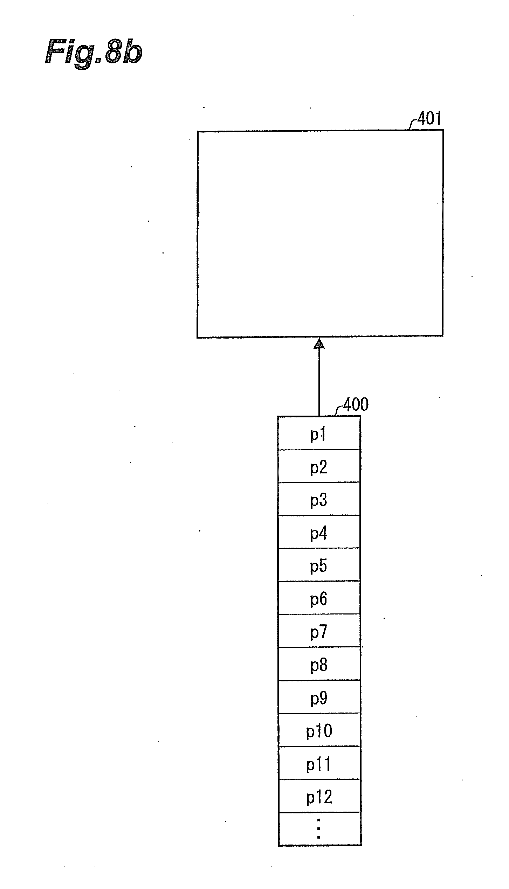

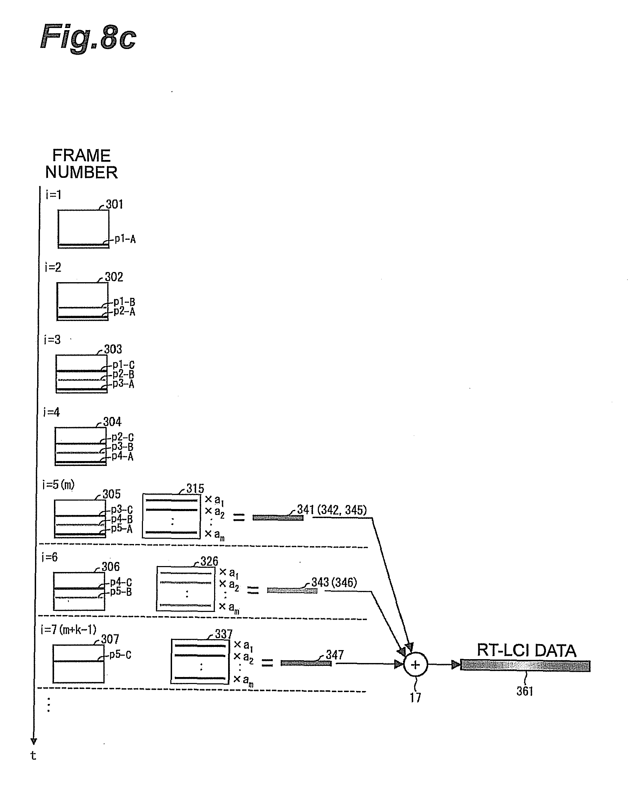

For explaining the RT-LCI image processing in more detail, the image data stored in the first to fourth memory units and the images displayed on the display unit 30 will be described below on the basis of Fig. 8a, Fig. 8b, and Fig. 8c. Fig. 8a is a state transition diagram showing states of image data stored in the respective memory units and an image displayed on the display unit 30, for each of frames. The horizontal axis of Fig. 8a represents time (time in frame unit). It is assumed that the number k of types of imaging angles is set to k=3 and the number m of rows of the differential operator is set to m=5. It is also assumed that the number of pixels of the area camera 5 is n pixels in width (the size in the direction perpendicular to the moving direction of the specimen 2; n is an integer of 2 or more) $\times$ 9 pixels in height (the size along the moving direction of the specimen 2) and that the width of one line is one pixel. Namely, pixels of one line are assumed to be n pixels $\times$ one pixel. It is also assumed herein that the distance of movement (movement width) of the specimen 2 per frame by the conveyor 3 is equal to the real distance indicated by the width of one line. Namely, the real distance indicated by one pixel (the resolution of one pixel) is assumed to be equal to the foregoing movement width.

Numeral 400 in Fig. 8b designates the specimen 2, signs (p1, p2, ...) described in 400 represent positions of the specimen 2, and the positions (p1, p2, ...) are divided every movement width. As shown in Fig. 8b, the specimen 2 is assumed to be conveyed from bottom to top of an imaging range 401 of the area camera 5 by the conveyor 3.

Numeral 410 in Fig. 8a designates image data stored in the first memory unit 21. Namely, the image data are image data of original images taken by the area camera 5. The image data 301-310 are image data taken at respective frame numbers i=1-10. Each of the image data 301-310 has the pixel number of n pixels $\times$ 9 pixels, as described above, and includes nine line data. Let us divide each image data 301-310 into nine line data and the nine line data will be referred to as the first line, the second line, ..., and the ninth line in order from the bottom of each image data 301-310. Since the number k of types of imaging angles is equal to 3, it is assumed herein that the line data are extracted from the first line, the second line, and the third line. Namely, the line data at the aforementioned prescribed position is assumed to be the first line data (the lowermost line data). For description of subsequent image data, the first line is assumed to be imaging angle A, the second line imaging angle B, and the third line imaging angle C. For convenience of description, each image data 301-310 is provided with the position (p1, p2, ...) of the specimen 2 and the imaging angle (A-C) corresponding to each line data. Specifically, for example, "p1-A" indicates line data corresponding to the imaging angle A or the first line and line data corresponding to the position p1 of the specimen 2.

Numeral 420 in Fig. 8a designates line data of not less than one line and not more than m lines (5 lines in this example) stored in the second memory unit 22. Furthermore, numeral 421 designates line data of not less than one line and not more than m lines (5 lines in this example) stored in the first region 221, numeral 422 line data of not less than one line and not more than m lines stored in the second region 222, and numeral 423 line data of not less than one line and not more than m lines stored in the third region 223. Namely, line-composited image data 311-320 are line data of not less than one line and not more than m lines (5 lines in this example) stored in the first region 221, line-composited image data 321-330 line data of not less than one line and not more than m lines (5 lines in this example) stored in the second region 222, and line-composited image data 331-340 line data of not less than one line and not more than m lines (5 lines in this example) stored in the third region 223. Each of the first region 221 to the third region 223 is divided into five zones because the number m of rows of the differential operator is set as m=5. Each of the line-composited image data 311-340 is composed of at least one and at most five line data, and the line data indicate those stored in the first zone, the second zone, ..., and the fifth zone of each region, in order from the bottom of each line-composited image data 311-340. For convenience of description, each line-composited image data 311-340 is provided with the position (p1, p2, ...) of the specimen 2 and the imaging angle (A-C) corresponding to each line data.

Numeral 430 in Fig. 8a designates emphasized image data stored in the third memory unit 23. For convenience of description, each emphasized image data in 430 is provided with the corresponding position of the specimen 2 (p3, p4, ...) and the imaging angle (A-C), for each of the emphasized image data.

Furthermore, numeral 440 in Fig. 8a designates defect inspection image data (RT-LCI data) stored in the fourth memory unit 24. Numeral 450 in Fig. 8a designates images displayed on the display unit 30. For convenience of description, each of the RT-LCI data 361-370 and the images 381-384 is also provided with the corresponding position of the specimen 2 (p3, p4, ...), for each line.

Fig. 8c is a drawing showing the processing to generate the first-generated RT-LCI data. The vertical axis of Fig. 8c represents time (time in frame unit). As is the case in Fig. 8a, it is assumed that the number k of types of imaging angles is set to k=3 and the number m of rows of the differential operator is set to m=5. In Fig. 8c, the same data as the data in Fig. 8a are denoted by the same reference signs. In Fig. 8c, $a_1$, $a_2$, ..., and $a_m$ represent elements of the first, second, ..., and mth rows of the differential operator.

In light of these, the specific processing of RT-LCI will be described below. It is assumed that there is no data stored in each of the memory units at a start of the RT-LCI processing. The RT-LCI processing is assumed to start when the top edge p1 of the specimen 2 goes into the imaging range 401 of the area camera 5.

The image data 301 is data taken at the frame number i=1 and shows a state in which the top edge p1 of the specimen 2 is located at the first line. At this time, the first extraction part 111 extracts line data p1-A from the first line (prescribed line) of the image data 301 and the first storage part 131 stores the line data p1-A extracted by the first extraction part 111, into the first zone of the first region 221. The line-composited image data 311 indicates the line data stored in the first region 221 at this point. Since the frame number i is equal to 1, the second extraction part 112 and the third extraction part 113 do not perform the processing and, because line data is not stored in all the zones of the first region 221, they wait for a transition to the next frame.

When the frame number i is equal to 2, the top edge p1 of the specimen 2 is located at the second line and p2 is on the first line. The image data taken by the area camera 5 at this time is the image data 302. The first extraction part 111 extracts line data p2-A from the first line of the image data 302. At this time, the first judgment part 121 of the first zone judgment unit 12 judges that there is line data in the first zone of the first region 221, and therefore the first storage part 131 moves the line data p1-A in the first zone of the first region 221 (the line data of the first line made corresponding to the position p1) into the second zone of the first region 221 and stores the line data p2-A extracted by the first extraction part 111 (the line data made corresponding to the position p2) into the first zone of the first region 221. Since the frame number i is equal to 2, the second extraction part 112 extracts line data p1-B from the second line of the image data 302 and the second storage part 132 stores the line data p1-B extracted by the second extraction part 112, into the first zone of the second region 222. Since line data is not stored in all the zones of the first region 221 and the second region 222 at this point, a transition to the next frame is awaited.

When the frame number i is equal to 3, the top edge p1 of the specimen 2 is located at the third line and the positions p1-p3 are in the imaging range 401 of the area camera 5. The image data taken by the area camera 5 at this time is the image data 303. In the same manner as before, the first extraction part 111 and the second extraction part 112 extract line data p3-A and p2-B from the first line and the second line, respectively, of the image data 303, and the first storage part 131 and the second storage part 132 move up the line data previously stored in the first region 221 and the line data previously stored in the second region 222, respectively, by one zone and store the line data p3-A and p2-B into the respective first zones of the first region 221 and the second region 222. Since the frame number i is equal to 3 herein, the third extraction part 113 extracts line data p1-C from the third line of the image data 303 and the third storage part stores the line data p1-C extracted by the third extraction part 113, into the first zone of the third region 223. Since line data is not stored in all the zones of the first region 221, the second region 222, and the third region 223 at this point, a transition to the next frame is awaited.

At the frame numbers i=4 and 5, similarly, the first to third extraction parts 111-113 extract line data p4-A, p3-B, and p2-C and line data p5-A, p4-B, and p3-C from the first to third lines of the image data 304 and 305 and the first to third storage parts 131-133 move up each of the line data previously stored in the first to third regions 221-223, respectively, by one zone and store the line data p4-A, p3-B, and p2-C and the line data p5-A, p4-B, and p3-C into the respective first zones of the first to third regions 221-223. As a consequence of these, the line-composited image data 315 stored in the first region 221 becomes line-composited image data resulting from composition of the first lines (imaging angle A) in the image data 301 to 305 of the first to fifth frames. At the frame number i=5, the line data are stored in all the zones of the first region 221, as shown by the line-composited image data 315, and therefore the first judgment part 141 of the every zone judgment unit 14 judges that there are line data in all the zones of the first region 221 and the first calculation part 151 performs the differential operator operation (arithmetic operation with a differential filter) on the line-composited image data 315 to generate emphasized image data 341 indicating absolute values of brightness gradients in the center line data of the line-composited image data 315, i.e., the line data p3-A stored in the third zone of the first region, and stores the data 341 into the third memory unit 23. At this time, the first calculation part 151 adds to the emphasized image data as the result of the differential operator operation, the sign p3 indicative of the position of the specimen 2 made corresponding to the line data p3-A stored in the third zone of the first region and the sign A indicative of the imaging angle corresponding to the line-composited image data 315. At this point, the identical position judgment/extraction unit 16 judges whether emphasized image data of all the imaging angles (three types) indicating an identical position (portion) of the specimen 2 are stored in the third memory unit 23, but, because only the emphasized image data 341 is stored in the third memory unit 23, a transition to the next frame is awaited.

At the frame number i=6, the first to third extraction parts 111-113 extract line data p6-A, p5-B, and p4-C, respectively, from the first to third lines of the image data 306 and the first to third storage parts 131-133 move up the respective line data previously stored in the first to third regions 221-223, each by one zone and store the line data p6-A, p5-B, and p4-C into the respective first zones of the first to third regions 221-223. As a consequence of these, the line-composited image data 316 and the line-composited image data 326 stored in the first region 221 and in the second region 222 become line-composited image data resulting from composition of the first lines (imaging angle A) in the image data 302-306 of the second to sixth frames and line-composited image data resulting from composition of the second lines (imaging angle B) in the image data 302-306 of the second to sixth frames. Since the line data are stored in all the zones of the first region 221 and the second region 222, the first calculation part 151 performs the differential operator operation on the line-composited image data 316 to generate line image data 344 indicating absolute values of brightness gradients in the line data p4-A, the second calculation part 152 performs the differential operator operation on the partial image data 326 to generate emphasized image data 343 indicating absolute values of brightness gradients in the line data p3-B, the generated emphasized image data 344 is provided with the sign p4 and the sign A to be stored into the third memory unit 23, and the generated emphasized image data 343 is provided with the sign p3 and the sign B to be stored into the third memory unit 23. Since brightness data of all the imaging angles (three types) indicating an identical position (portion) of the specimen 2 are not stored in the third memory unit 23 at this point, a transition to the next frame is awaited.

At the frame number i=7, the first to third extraction parts 111-113 extract line data p7-A, p6-B, and p5-C, respectively, from the first to third lines of the image data 307 and the first to third storage parts 131-133 move up the respective line data previously stored in the first to third regions 221-223, each by one zone and store the line data p7-A, p6-B, and p5-C into the respective first zones of the first to third regions 221-223. As a consequence of these, the line-composited image data 317, 327, and 337 stored in the first to third regions 221-223 become line-composited image data resulting from composition of the first lines (imaging angle A) in the image data 303 to 307 of the third to seventh frames, line-composited image data resulting from composition of the second lines (imaging angle B) in the image data 303 to 307 of the third to seventh frames, and line-composited image data resulting from composition of the third lines (imaging angle C) in the image data 303-307 of the third to seventh frames. Since the line data are stored in all the zones of the first region 221, the second region 222, and the third region 223, the first calculation part 151 performs the differential operator operation on the line-composited image data 317 to generate emphasized image data 350 indicating absolute values of brightness gradients in the line data p5-A, the second calculation part 152 performs the differential operator operation on the line-composited image data 327 to generate emphasized image data 349 indicating absolute values of brightness gradients in the line data p4-B, the third calculation part 153 performs the differential operator operation on the line-composited image data 337 to generate emphasized image data 347 indicating absolute values of brightness gradients in the line data p3-C, and each of the emphasized image data 350, 349, and 347 thus generated is stored into the third memory unit 23. At this time, since the emphasized image data (emphasized image data 345-347) of all the imaging angles (three types of A, B, and C) indicating an identical position p3 of the specimen 2 are stored in the third memory unit 23, the integration unit 17 accumulates the brightness values of the emphasized image data 345, 346, and 347 to generate RT-LCI data 361 of the position p3, and stores the data 361 into the fourth memory unit 24. Then the image generation unit 18 outputs the RT-LCI data 361 of the position p3 as new defect inspection image data to the display unit 30 and the display unit 30 displays a defect inspection image 381.

The generation processing of RT-LCI data 361 will be described again below on the basis of Fig. 8c. As shown in Fig. 8c, at the frame number i=5 (m), the differential operator operation of five (m) rows and one column is performed on the line-composited image data 315 resulting from composition of identical lines of the image data 301-305 of five (m) frames to generate the emphasized image data 341 indicating absolute values of brightness gradients in the line data p3-A (the emphasized image data 342, 345, etc. in the subsequent frames). Next, at the frame number i=6, the differential operator operation of five rows and one column is performed on the line-composited image data 326 resulting from composition of identical lines of the image data 302-306 of five frames to generate the emphasized image data 343 indicating absolute values of brightness gradients in the line data p3-B (the emphasized image data 346 and others in the subsequent frames). At the frame number i=7 (=m+k-1), the differential operator operation of five rows and one column is performed on the line-composited image data 337 resulting from composition of identical lines of the image data 303-307 of five frames to generate the emphasized image data 347 indicating absolute values of brightness gradients in the line data p3-C. The brightness values of the emphasized image data 345-347 at the same observation position in three (k) frames thus generated are accumulated to generate the RT-LCI data 361 of the position p3.

At the frame number i=8, the first to third extraction parts 111-113 extract line data p8-A, p7-B, and p6-C, respectively, from the first to third lines of the image data 308 and the first to third storage parts 131-133 move up the respective line data previously stored in the first to third regions 221-223, each by one zone and store the line data p8-A, p7-B, and p6-C into the respective first zones of the first to third regions 221-223. As a consequence of these, the line-composited image data 318, 328, and 338 stored in the first to third regions 221-223 become line-composited image data resulting from composition of the first lines (imaging angle A), the second lines (imaging angle B), and the third lines (imaging angle C) in the image data 304-308 of the fourth to eighth frames. Since the line data are stored in all the zones of the first region 221, the second region 222, and the third region 223, the first calculation part 151 performs the differential operator operation on the line-composited image data 318 to generate emphasized image data 356 indicating absolute values of brightness gradients in the line data p6-A, the second calculation part 152 performs the differential operator operation on the line-composited image data 328 to generate emphasized image data 355 indicating absolute values of brightness gradients in the line data p5-B, the third calculation part 153 performs the differential operator operation on the line-composited image data 338 to generate emphasized image data 353 indicating absolute values of brightness gradients in the line data p4-C, and each of the emphasized image data 356, 355, and 353 thus generated is stored into the third memory unit 23. At this time, since the emphasized image data (emphasized image data 351-353) of all the imaging angles (three types of A, B, and C) indicating an identical position p4 of the specimen 2 are stored in the third memory unit 23, the integration unit 17 accumulates the brightness values of the emphasized image data 351-353 to generate RT-LCI data 363 of the position p4, and stores the data 363 into the fourth memory unit 24. Then the image generation unit 18 arranges the RT-LCI data 362, 363 in order of p3 and p4 from the top so as to make the RT-LCI data 362, 363 corresponding to the positional relation of the specimen 2, to composite new defect inspection image data, and outputs the image data to the display unit 30. At this time, the display unit 30 displays a defect inspection image 382 of the positions p3 and p4.

In the same manner in the following operation, at the frame number i=9, defect inspection image data resulting from arrangement and composition of RT-LCI data of the positions p3, p4, and p5 is outputted to the display unit 30 and a defect inspection image of the positions p3, p4, and p5 is displayed on the display unit 30; at the frame number i=10, defect inspection image data resulting from arrangement and composition of RT-LCI data of the positions p3, p4, p5, and p6 is outputted to the display unit 30 and a defect inspection image of the positions p3, p4, p5, and p6 is displayed on the display unit 30. Then, for example, when the positions of the specimen 2 are assumed to be positions p1 to p478, the last process is carried out as follows: at the frame number i=480, defect inspection image data resulting from arrangement and composition of RT-LCI data of the positions p3-p476 is outputted to the display unit 30 and a defect inspection image of the positions p3 to p478 is displayed on the display unit 30. Therefore, the defect inspection image data can be obtained for most (474/478) of the positions of the specimen 2. If an object to be inspected is defined as only the positions p3-p476 of the specimen 2, the defect inspection image data can be obtained for the whole object.

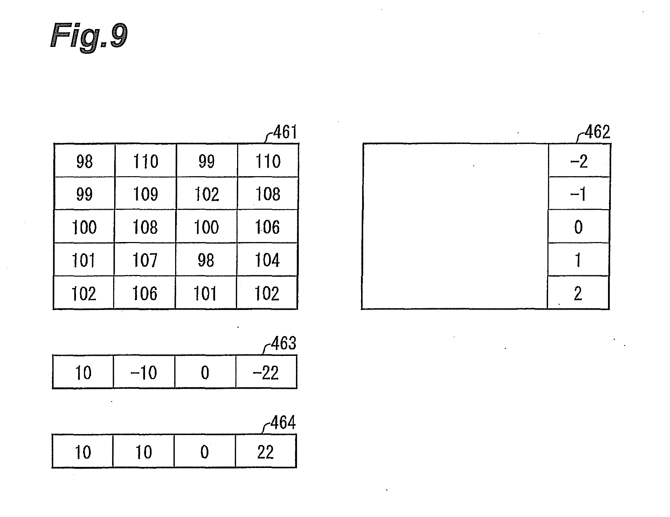

The details of the arithmetic processing carried out by the change amount calculation unit 15 will be described below on the basis of Fig. 9. For simplicity of description, the number of pixels of the area camera 5 is assumed to be 4 pixels horizontal $\times$ 9 pixels vertical (n=4).

Except for the above, the conditions used in the description of Figs. 8a to 8c will be applied as they are. Fig. 9 is a drawing showing an example of line-composited image data consisting of a plurality of line data stored in the second memory unit 22, the differential operator used by the change amount calculation unit 15, and values of emphasized image data calculated by the change amount calculation unit 15.

Matrix 461 shown in Fig. 9 is a matrix of five rows and four columns whose elements are brightness values of all the pixels in the line-composited image data (corresponding to the line-composited image data 315, 326, 337, etc. shown in Figs. 8a and 8c) consisting of five line data stored in the second memory unit 22. Matrix 462 shown in Fig. 9 is the differential operator (differential filter) of five rows and one column used by the change amount calculation unit 15. Matrix 463 shown in Fig. 9 is a matrix of five rows and four columns whose elements are longitudinal brightness gradients calculated by the change amount calculation unit 15. Matrix 464 shown in Fig. 9 consists of absolute values of the matrix 463 and shows the brightness values of all the pixels in the emphasized image data 341-356 shown in Fig. 8a.

The change amount calculation unit 15 multiplies the matrix 461 by the matrix 462 of the differential operator. Specifically, first, the first column of the matrix 461 is multiplied by the matrix 462 to calculate a value in the first column of the matrix 463. Namely, the following calculation is performed on the first column of the matrix 461 to calculate the value in the first column of the matrix 463. The calculation is as follows: $98\times(-2)+99\times(-1)+100\times0+101\times1+102\times2=10$. Subsequently, the second to fourth columns of the matrix 461 are multiplied similarly by the matrix 462 to calculate values of the second to fourth columns in the matrix 463, whereby the matrix 463 is generated as brightness data of the center line of the line-composited image data. In this manner, the change amount calculation unit 15 multiplies the line-composited image data consisting of five line data, by the differential operator to calculate longitudinal brightness gradients of the center line data in the line-composited image data, thereby generating the brightness data. By calculating the gradients of brightness values of the line-composited image data, it becomes easier to detect a small defect, a thin defect, or a faint defect on the specimen 2.

If the brightness gradient calculated by the change amount calculation unit 15 is not 0, it indicates that there is a defect at a corresponding position of the specimen 2 (provided that the brightness gradient close to 0 can be noise, instead of a defect). If there is a defect of the specimen 2, the defect will appear dark in the region where the light from the linear light source 4 is incident without being blocked by the knife edge 7, or the defect will appear bright in the region where the light from the linear light source 4 is blocked by the knife edge 7 and is not incident directly, in the specimen 2. For this reason, the signs of values of brightness gradients do not affect the presence/absence of the defect and the magnitude of each brightness gradient is important in determining whether there is a defect or not. Therefore, as shown by the matrix 464 in Fig. 9, the change amount calculation unit 15 obtains the absolute values of the matrix 463 of brightness gradients generated by the change amount calculation unit 15, to generate the matrix 464. As described above, the change amount calculation unit 15 replaces the brightness values of the respective pixels in the center line of the line-composited image data with absolute values of longitudinal brightness gradients at the respective pixels to generate new emphasized image data of one line. In use of the absolute values of brightness gradients in this manner, the defect on the bright side and the defect on the dark side both make the same positive contribution, so as to make the discrimination of the presence/absence of defect easier. Furthermore, since the defects on the bright side and on the dark side can be handled in the same manner, it is sufficient to arrange the imaging range of the area camera 5 so as to cross the knife edge 7, in positioning of the optical system. Furthermore, accurate inspection can be performed without need for precisely positioning the knife edge 7 in alignment with the horizontal direction of the area camera 5. Namely, there is no need for highly accurate arrangement of the optical system in the dark field method, which makes the arrangement simpler than before. For this reason, improvement is achieved in inspection performance of the defect inspection system and in maintenance of the device system of the defect inspection system, particularly, in maintenance of the optical system.

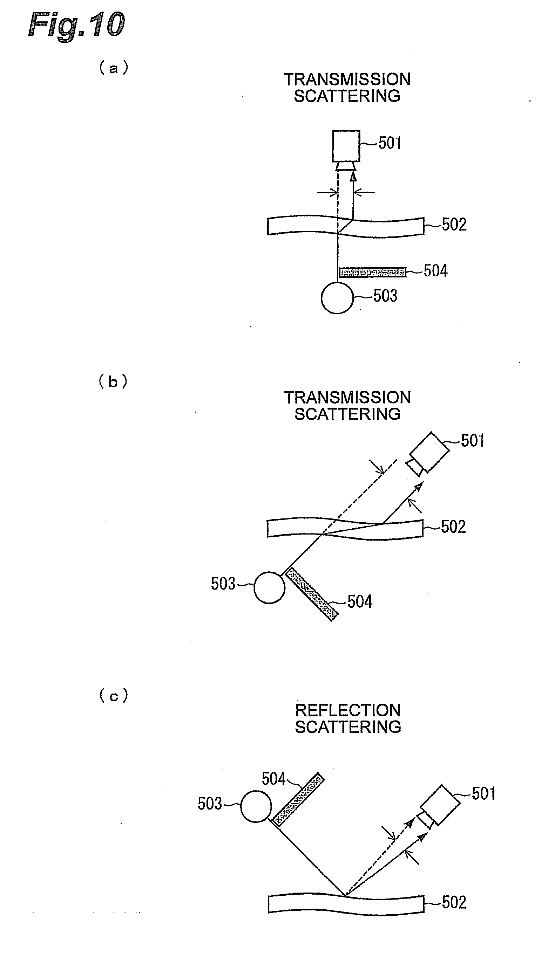

Furthermore, when the RT-LCI processing is performed on the image data taken by the area camera 5, the defect can be accurately detected without being affected by the thickness and warpage of the specimen 2. In the conventional transmission scattering method, as shown in Fig. 10 (a) and (b), if the specimen 2 is relatively thick or if the specimen 2 is warped, the light emitted from the linear light source 4 can be refracted in transmission through the specimen 2 to enter the area camera 5 with a shift from the optical axis thereof. In the conventional reflection scattering method, as shown in Fig. 10 (c), if the specimen 2 is relatively thick or if the specimen 2 is warped, the light emitted from the linear light source 4 can be reflected at an angle different from an intended angle of reflection in design of the optical system, in reflection on the specimen 2, and the reflected light can enter the area camera 5 with a shift from the optical axis thereof. If the light from the linear light source 4 is unintentionally shifted from the optical axis to enter the area camera 5 because of influence of the thickness and warpage of the specimen 2 as described above, it cannot be discriminated from a shift of the optical axis due to a defect on the specimen 2 and can be misread as a defect on the specimen 2.

In the transmission scattering method, if the specimen 2 is relatively thin, if the curvature of the specimen 2 is relatively small, or if an angle of incidence (angle between the Z-axis in Fig. 2 and the optical axis of incident light to the area camera 5) is relatively small, as shown in Fig. 10 (a), the shift of the optical axis is small, so as to cause a relatively small effect on the image taken by the area camera 5. On the other hand, if the specimen 2 is relatively thick, if the curvature of the specimen 2 is relatively large, or if the angle of incidence is relatively large, as shown in Fig. 10 (b), the shift of the optical axis becomes large, so as to cause an unignorable effect on the image taken by the area camera 5. In the reflection scattering method, in addition to the foregoing, even if the angle of reflection is slightly different, the shift of the optical axis will become large in comparison to the distance between the specimen 2 and the area camera 5.

In the present embodiment, the optical axis can also be shifted by virtue of the thickness and/or warpage of the specimen 2, as in the conventional methods. However, the present embodiment involves calculating gradients of brightness values of image data taken by the area camera 5 and integrating absolute values of gradients at a plurality of imaging angles, thereby suppressing the influence of the shift of the optical axis due to the thickness and warpage of the specimen 2.

In the present embodiment, the distance of movement of the specimen 2 from taking of a certain image to taking of a next image (one frame duration) by the area camera 5, i.e., the movement width, is equal to the real distance indicated by the width of the line data extracted by the data extraction unit 11, but the present invention is not limited to this example. For example, in a case where the conveyance speed of the conveyor 3 is five times and where the specimen 2 moves the length of five pixels during one frame duration, the same RT-LCI processing can be performed if the width of the line data extracted by the data extraction unit 11 is set to five pixels. On the contrary, in a case where the conveyance speed of the conveyor is one fifth times and where the specimen 2 moves one fifth of a pixel during one frame duration, the same RT-LCI processing can be performed by extracting line data ($n \times 1$ pixels) per five frames by the data extraction unit 11. In other cases where precise matching cannot be achieved between the real distance indicated by the width of the line data extracted by the data extraction unit 11 and the movement width (e.g., where a ratio of the resolution per pixel of the area camera 5 and the movement width is an incomplete value like 1:1.05), the same RT-LCI processing can be performed by correcting the positions of the line data using the pattern matching technology. Since the foregoing pattern matching technology can be readily implemented by hardware and there are a variety of well-known techniques, it is possible to use any one of the well-known techniques suitable for the RT-LCI processing.

The image analyzer 6 of the present embodiment is provided with the first to kth regions 221-22k, the first to kth judgment parts 121-12k, and the first to kth storage parts 131-13k, as means for storing the line data of the first to kth lines extracted by the data extraction unit 11, but these may be replaced by k FIFO (First In, First Out) memories that store the respective line data of the first to kth lines extracted by the data extraction unit 11.
In this case, each FIFO memory is provided with first to fifth zones for storing the respective line data of one line, and at every reception of new line data, it stores the received line data into the first zone, moves up data stored in the second to fourth zones to the third to fifth zones, and discards data stored in the fifth zone.

In the present embodiment the area camera 5 is fixed and the specimen 2 is moved by the conveyor 3, but the present invention is not limited to this example; the point is that there is relative movement between the area camera 5 and the specimen 2.

In the present embodiment, the data irrespective of the RT-LCI processing or unnecessary after used (the image data, line data, etc.) may be discarded each time, or may be saved as backup data in the same memory unit or in another memory unit. For example, the image data 301-310 shown in Fig. 8a are not used in the RT-LCI processing after the extraction of the line data, but they may be saved in the first memory unit 21 or the like.

Furthermore, a smoothing process may be carried out before or after the change amount calculation unit 15 calculates the gradients of brightness values of line-composited image data. The change amount calculation unit 15 to calculate the gradients of brightness values of line-composited image data may be replaced with a smoothing processing unit to generate emphasized image data by performing the smoothing process using a smoothing operator of m rows and one column, on the line-composited image data consisting of a plurality of line data stored respectively in the first to kth regions 221-22k. When the smoothing process is carried out, it becomes feasible to detect a small (faint or thin) defect that can be hidden in noise. In this case, the foregoing smoothing operator applicable herein can be, for example, a smoothing operator such as a matrix of seven rows and one column $(1, 1, 1, 1, 1, 1, 1)^T$. The change amount calculation unit 15 to calculate the gradients of brightness values of line-composited image data may be replaced with an operator arithmetic processing unit to perform an operation using another operator (a sharpening operator or the like) to emphasize brightness change, on the line-composited image data.

The defect inspection image data composited by the image generation unit 18 may be outputted after the brightness values are binarized by an appropriate threshold. This removes noise so that the defect inspection image data more clearly and accurately indicating the defect can be outputted and displayed. In the case where binarization is carried out, a region of not more than a prescribed size may be removed as noise, out of regions corresponding to defect regions in the binarized image data (bright regions in the present embodiment). This allows the defect inspection image data more accurately indicating the defect to be outputted and displayed. Furthermore, in the case where binarization is carried out, the defect inspection may be performed based on whether a brightness value of each pixel in the binarized image data is a brightness indicative of a defect (a high brightness in the present embodiment).

In the present embodiment, the defect of the specimen is inspected by the dark field method of taking the two-dimensional images of the specimen with the use of the knife edge 7 and detecting the defect as a bright position (caused by light scattered by the defect of the specimen 2) in the dark field (region where the light from the linear light source 4 is blocked by the knife edge 7 so as not to be linearly incident) in the image data for defect inspection. However, without having to be limited to this, the defect of the specimen may be inspected by the bright field method of taking the two-dimensional images of the specimen without use of the knife edge 7 and detecting the defect as a dark position (caused by scattering of light due to the defect of the specimen 2) in the bright field (region illuminated by the linear light source 4) in the image data for defect inspection.

In the present embodiment the RT-LCI processing is performed every one frame duration, but the present invention does not have to be limited to this; for example, the RT-LCI processing may be carried out every prescribed frame duration; or, after completion of imaging, image processing of line composition and integration similar to the RT-LCI processing may be carried out for the taken image data together. Specifically, when a high speed camera is used as the area camera 5, it is difficult to perform the RT-LCI processing in real time (or every one frame duration); therefore, images taken by the high speed camera are saved once as image data in a memory device such as a hard disk drive, and the image processing of line composition and integration similar to the RT-LCI processing may be carried out while reading out the saved image data in time series. The processing of line composition and integration that is not carried out in real time, as described above, will be referred to as software LCI processing.

The present embodiment employs the PC installed with the image processing software, as the image analyzer 6, but the present invention does not have to be limited to this; for example, the area camera 5 may incorporate the image analyzer 6; or, a capture board (an expansion card of PC) to capture image data from the area camera 5, instead of the PC, may incorporate the image analyzer 6.

In the present embodiment the change amount calculation unit 15 performs the differential operator operation using the same differential operator on all the partial image data stored in the respective regions of the second memory unit 22, but the present invention does not have to be limited to this. For example, the change amount calculation unit 15 may be configured as follows: the first calculation part thereof performs the differential operator operation using a certain differential operator A, on the line-composited image data (315 and others) stored in the first region; the second calculation part performs the differential operator operation using a differential operator B different from the differential operator A, on the line-composited image data (326 and others) stored in the second region; the third calculation part performs the differential operator operation using a differential operator C different from the differential operators A and B, on the line-composited image data (337 and others) stored in the third region. In addition, an operation using another operator to emphasize brightness change may be performed, e.g., a smoothing operator or the like, instead of the differential operator operation.

For example, when the specimen is scanned by the bright field method, there are cases where the line-composited image data extracted from the respective taken image data become substantially identical. In such cases, emphasized image data may be generated by applying different differential operator operations to the respective line-composited image data being substantially identical. Various defects can be detected by integrating a plurality of emphasized image data generated using the different differential operator operations.

In the present embodiment the change amount calculation unit 15 performs the operator operation to generate the emphasized image data and thereafter the identical position judgment/extraction unit 16 extracts the emphasized image data indicating an identical position of the specimen 2, but the present invention does not have to be limited to this order. For example, the operation may be arranged as follows: the identical position judgment/extraction unit 16 first extracts the line-composited image data indicating an identical position of the specimen 2 and thereafter the change amount calculation unit 15 performs the operator operation on the line-composited image data extracted by the identical position judgment/extraction unit 16, to generate the emphasized image data.

In other words, the operation may be arranged as follows: the change amount calculation unit 15 performs the operation using the operator to emphasize brightness change, on each of the plurality of line-composited image data composited by the data storage unit 13, to generate each of a plurality of emphasized image data of one line or a plurality of lines; the identical position judgment/extraction unit 16 extracts a plurality of emphasized image data indicating an identical position of the specimen 2, from the plurality of emphasized image data generated by the change amount calculation unit 15; the integration unit 17 accumulates, at respective pixels, brightness values of the plurality of emphasized image data extracted by the identical position judgment/extraction unit 16 to generate the defect inspection image data. Furthermore, the operation may be arranged as follows: the identical position judgment/extraction unit 16 extracts a plurality of line-composited image data indicating an identical position of the specimen 2, from the plurality of the line-composited image data composited by the data storage unit 13; the change amount calculation unit 15 performs the operation using the operator to emphasize brightness change, on each of the plurality of line-composited image data extracted by the identical position judgment/extraction unit 16, to generate each of a plurality of emphasized image data of one line or a plurality of lines; the integration unit 17 accumulates, at respective pixels, brightness values of the plurality of emphasized image data generated by the change amount calculation unit 15 to generate the defect inspection image data.

The present embodiment involves adding the sign (identifier) to specify (or identify) the position on the specimen 2, to each extracted line data when the data extraction unit 11 extracts the line data from the taken image data, but the present invention does not have to be limited to this. The sign to specify the position on the specimen 2 can be added to the image data (the taken image data, line data, line-composited image data, emphasized image data, etc.) before the identical position judgment/extraction unit 16 performs the process of extracting the line-composited image data (or emphasized image data) indicating an identical position of the specimen 2. Furthermore, without adding the sign to specify the position on the specimen 2, to each image data, the identical position judgment/extraction unit 16 may be configured to specify and extract the line-composited image data (or emphasized image data) indicating an identical position of the specimen 2.

[Examples]

The below will describe an example in which the RT-LCI processing was performed on the image data taken by the area camera 5, in the defect inspection system 1 shown in Fig. 3. The main body of the area camera 5 used was a double-speed progressive scan monochrome camera module (XC-HR50 available from Sony Corporation). Furthermore, the lens of the area camera 5 used was a lens (focal length f=35 mm) available from Tamuron Co., Ltd., with a 5mm extension tube. The number of pixels of the area camera 5 is $512 \times 480$ pixels and the resolution per pixel is 70 $\mu$m/pixel. The area camera 5 was focused on the surface of the specimen. The frame rate of the area camera 5 was 60 FPS and imaging was performed in the ordinary TV format. The imaging was performed for eight seconds with the area camera and the RT-LCI processing was performed on 480 images. The conveyance speed of the conveyor 3 was set at 4.2 mm/sec. Namely, the specimen 2 was set to move 70 $\mu$m per frame. A 22-kHz high-frequency fluorescent tube was used as the linear light source 4. The illumination diffuser panel 8 used herein was a 3mm-thick opalescent PMMA (polymethyl methacrylate) sheet. The knife edge 7 used was an NT cutter. The specimen 2 used herein was a transparent PMMA sheet having defects such as bank marks and pits.

The setting of image processing in the RT-LCI processing was k=15 and m=5 or 7.

The number of pixels of the line data extracted by the data extraction unit 11 was $512 \times 1$ pixels and the movement width was set to be equal to the real distance indicated by the width of the line data.

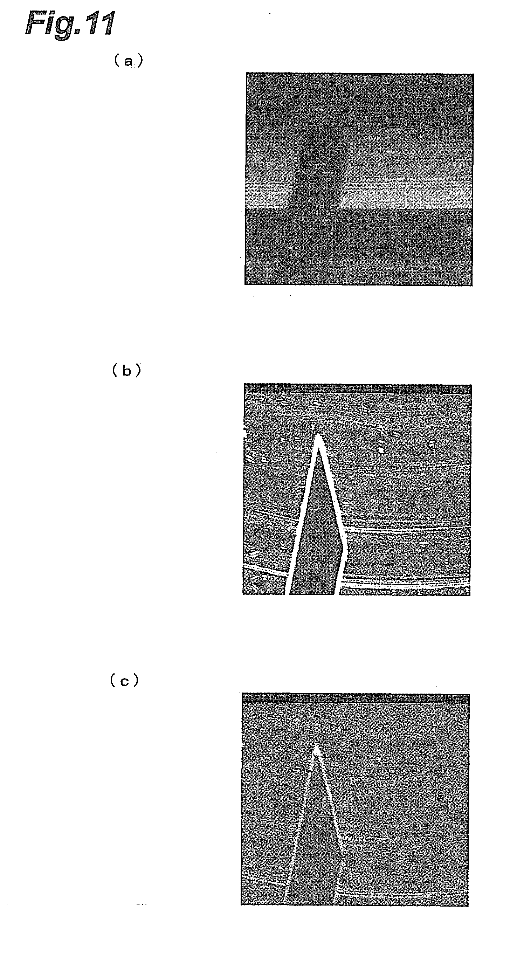

First, an example of execution of the RT-LCI processing will be described on the basis of Fig. 11. The image shown in Fig. 11 (a) is an original image, which is an image of the last frame (480th frame) in a video sequence taken by the area camera 5. This original image is the same kind as the image shown in Fig. 5 (a). In the original image shown in Fig. 11 (a), as in the case of Fig. 5 (a), the dark part in the bottom region is a position where the light is blocked by the knife edge 7, the bright position near the center is a position where the light from the linear light source 4 is transmitted, and the dark part in the top region is a position where the light from the linear light source 4 does not reach, which is out of an inspection target. The dark position projecting upward from the lower edge of the original image shown in Fig. 11 (a) is a shadow of an object placed as a mark. Furthermore, the image shown in Fig. 11 (b) is an RT-LCI image obtained by performing the RT-LCI processing on the image data near the knife edge 7 of the original image and arranging the RT-LCI data in accordance with the original image. Defects are indicated at positions of bright positions in the RT-LCI image. It is seen with reference to the RT-LCI image that there are defects such as stripe bank marks and spot pits on the specimen 2. Furthermore, since positions on the specimen 2 correspond to positions on the image, it is possible to readily distinguish where which kind of defect is located on the specimen 2, by observation of the RT-LCI image.

Next, an example of the RT-LCI image obtained with use of a different differential operator in the change amount calculation unit 15 will be described on the basis of Fig. 11. Fig. 11 (a) is the image (the 480th frame) taken by the area camera 5. Fig. 11 (b) is the drawing showing an example of the RT-LCI image obtained by using the setting of m=7 and performing the RT-LCI processing using a matrix of seven rows and one column $(-3, -2, -1, 0, 1, 2, 3)^T$ as a differential operator, on the original image. The RT-LCI image shown in Fig. 11 (b) is an image resulting from processing to emphasize longitudinal brightness gradients of the image data of the original image. This differential operator is the arithmetic processing suitable for detection of a defect of very faint unevenness. Fig. 11 (c) is a drawing showing an example of the RT-LCI image obtained by using the setting of m=7 and performing the RT-LCI processing using a matrix of seven rows and one column $(-1, -1, -1, 6, -1, -1, -1)^T$ as a differential operator, on the original image. This differential operator is the arithmetic processing suitable for emphasis of only point defects of medium degree.

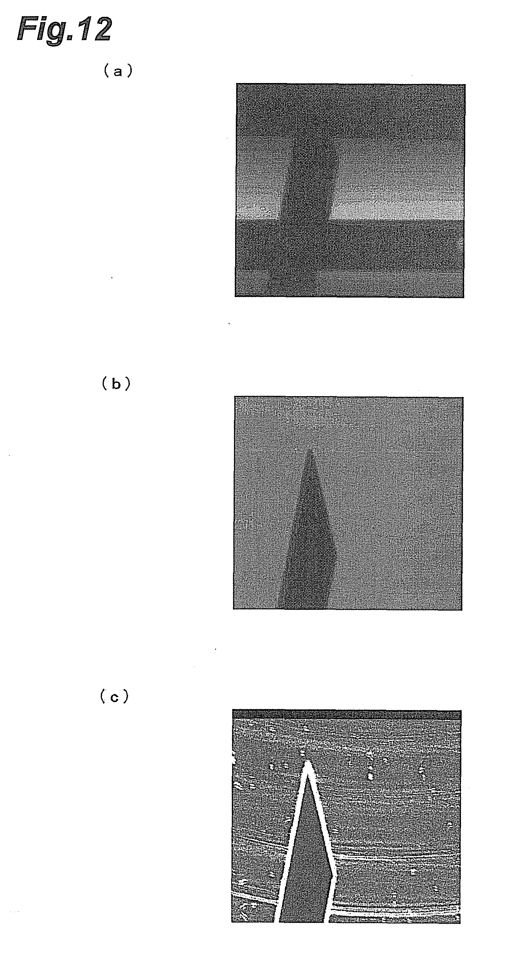

An example using another differential operator is shown in Fig. 12. Fig. 12 (a) is an original image taken by the area camera 5. Fig. 12 (b) is a line-composited image at a certain imaging angle near an edge of the original image. Furthermore, Fig. 12 (c) is an RT-LCI image obtained by using the setting of m=7 and performing the RT-LCI processing using a matrix of five rows and one column $(-2, -1, 0, 1, 2)^T$ as a differential operator, on the original image.

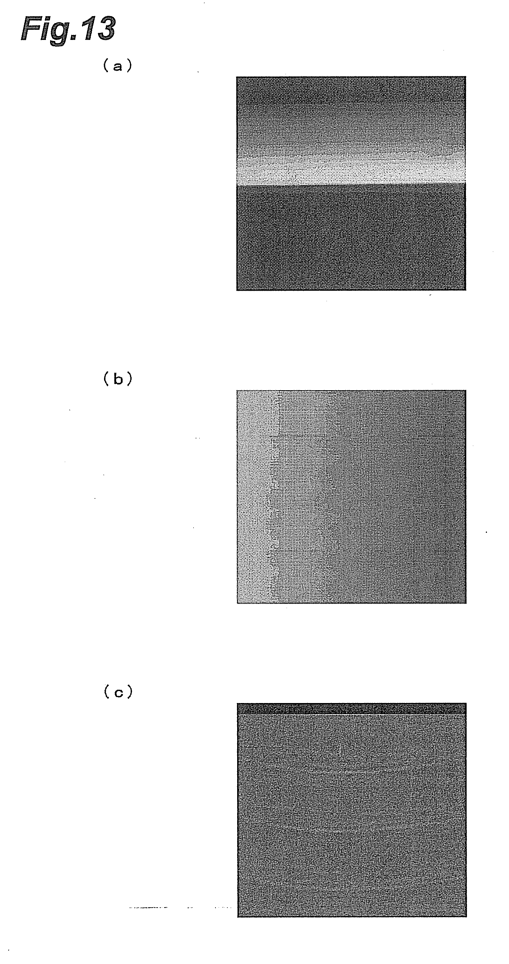

Next, an example of imaging with the knife edge being inclined relative to the horizontal direction of the area camera is shown in Fig. 13. Fig. 13 (a) is an original image taken by the area camera 5. Fig. 13 (b) is a line-composited image at a certain imaging angle near an edge of the original image, which is equivalent to the image obtained by the defect inspection system using the conventional line sensor. It is seen with reference to Fig. 13 (b) that the left side of the image is bright and the right side is dark. In the defect inspection system using the conventional line sensor, as seen, there was a significant effect on the image taken in the positional relation between the line sensor and the knife edge. Namely, the conventional system could not obtain the accurate inspection result unless the optical system including the line sensor and the knife edge was highly accurately positioned. Fig. 13 (c) is an RT-LCI image obtained by using the setting of m=5 and performing the RT-LCI processing using a matrix of five rows and one column $(-2, -1, 0, 1, 2)^T$ as a differential operator, on the original image. It is seen with reference to Fig. 13 (c) that the RT-LCI image is not affected by inclination of the knife edge 7, which is different from Fig. 13 (b). Namely, the defect inspection system 1 of the present invention is able to accurately detect the defect even if the knife edge 7 is positioned with inclination relative to the horizontal direction of the area camera 5.

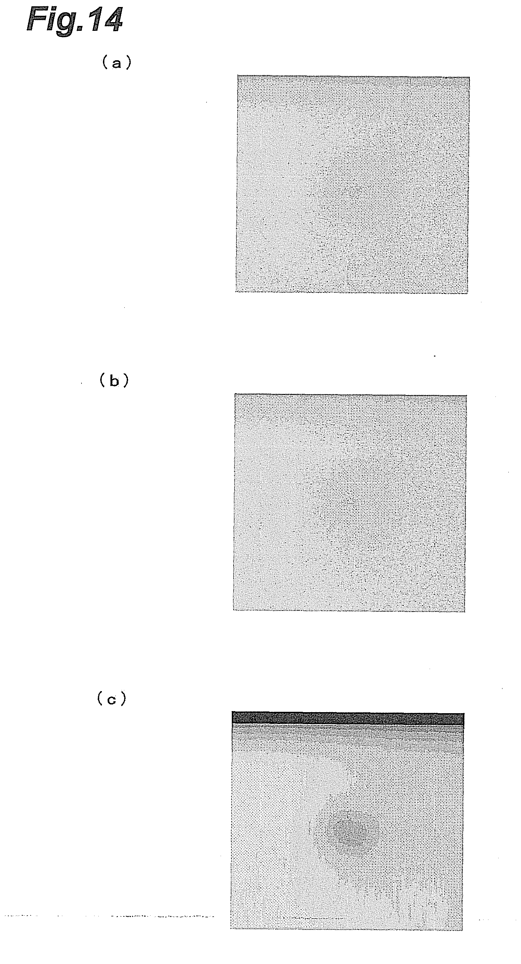

Next, an example of applying the smoothing operator to the RT-LCI processing will be described on the basis of Fig. 14.

Fig. 14 (a) is an original image taken by the area camera. Fig. 14 (b) is a line-composited image at a certain imaging angle near an edge of the original image. Fig. 14 (c) is an RT-LCI image obtained by using the setting of m=5 and performing the RT-LCI processing using a matrix of seven rows and one column $(1, 1, 1, 1, 1, 1, 1)^T$ as a smoothing operator in place of the differential operator, on the original image.

The present invention is by no means limited to the above-described embodiments, but can be modified in many ways within the scope specified in the claims. Namely, embodiments resulting from combinations of technical means properly modified within the scope specified in the claims are also included in the technical scope of the present invention.

Finally, the blocks of the image analyzer 6, particularly, the data extraction unit 11, the first zone judgment unit 12, the data storage unit 13, the every zone judgment unit 14, the change amount calculation unit 15, the identical position judgment/extraction unit 16, the integration unit 17, and the image generation unit 18, may be configured by hardware logic such as FPGA (Field Programmable Gate Array) circuits, or may be implemented by software using a CPU as described below.

Namely, the image analyzer 6 can be implemented, for example, by adding an arithmetic unit for extraction of line, an area FIFO memory, a comparator for binarization, etc. to an FPGA circuit to implement the differential operator operation of m rows and one column. The FPGA circuit to implement the differential operator operation of m rows and one column can be realized by m line FIFO memories to store image data of respective rows, m D-type flip-flops with enable terminal (DFFEs) to store respective coefficients (filter coefficients) of the differential operator, m multipliers to multiply the image data of respective rows by the coefficients of the differential operator, an addition circuit to add the multiplication results, and so on.

[Modification Examples]

The change amount calculation unit 15 may be configured so that the number of rows and the number of columns in the differential operator used can be properly set in accordance with the number of lines of the line-composited image data stored in the second memory unit 22. Furthermore, the emphasized image data generated as the result of calculation by the change amount calculation unit 15 does not have to be limited to the data composed of one line as described above, but may be composed of a plurality of lines, as the result of the calculation.

In the above-described embodiments and examples the change amount calculation unit 15 calculated the longitudinal brightness gradients, but the present invention does not have to be limited to this; for example, the change amount calculation unit 15 may be configured to calculate lateral brightness gradients.

In the above-described embodiments and examples the defect inspection image data was generated in accordance with the size (the number of pixels) of the image data taken by the area camera 5, but, without having to be limited to this, the defect on the specimen may be detected in such a manner that at least one RT-LCI data is generated as image data for defect inspection and the defect inspection is carried out based thereon.

The image analyzer 6 is provided with a CPU (central processing unit) to execute commands of a control program for implementation of the respective functions, a ROM (read only memory) storing the foregoing program, a RAM (random access memory) to develop the foregoing program, a storage device (recording medium) such as a memory to store the foregoing program and various data, and so on. Then the object of the present invention can also be achieved in such a manner that a recording medium in which program codes (execution format program, intermediate code program, and source program) of the control program of the image analyzer 6 being software to implement the aforementioned functions are recorded in a computer-readable state, is supplied to the image analyzer 6 and a computer thereof (or CPU or MPU) reads out and executes the program codes recorded in the recording medium.

Examples of the recording media applicable herein include tape media such as magnetic tapes and cassette tapes, disk media including magnetic disks such as floppy (registered trademark) disks/hard disks and optical disks such as CD-ROM/MO/MD/DVD/CD-R, card media such as IC cards (including memory cards)/optical cards, or semiconductor memory media such as mask ROM/EPROM/EEPROM/flash ROM.

Furthermore, the image analyzer 6 may be configured so that it can be connected to a communication network, and the aforementioned program codes are supplied through the communication network. There are no particular restrictions on the communication network; examples of the communication network applicable herein include the Internet, Intranet, Extranet, LAN, ISDN, VAN, CATV communication networks, virtual private networks, telephone line networks, mobile communication networks, satellite communication networks, and so on. There are no particular restrictions on transmission media constituting the communication network; examples of the transmission media applicable herein include wired medium such as IEEE1394, USB, power-line carrier, cable TV circuits, telephone lines, or ADSL lines, and wireless media such as infrared media, e.g., IrDA or remote control media, Bluetooth (registered trademark), 802.11 wireless, HDR, cell phone networks, satellite circuits, or digital terrestrial broadcasting networks. It should be noted that the present invention can also be realized in the form of a computer data signal embedded in a carrier wave, which is substantialized by electronic transmission of the foregoing program codes.

**Industrial Applicability**

The present invention is applicable to the defect inspection system to inspect the defect of the specimen such as a sheet-like specimen and to the imaging device for defect inspection, the image processing device for defect inspection, the image processing program for defect inspection, the computer-readable recording medium storing the image processing program for defect inspection, and the image processing method for defect inspection, which are used in the defect inspection system.

**List of Reference Signs**

1 defect inspection system
2 specimen
3 conveyor (moving means)
4 linear light source
5 area camera (imaging unit, a part of the imaging device for defect inspection)
6 image analyzer (image processing device for defect inspection)
7 knife edge
8 illumination diffuser panel
10 image processor (a part of the image processing device for defect inspection, a part of the imaging device for defect inspection)
11 data extraction unit (identical line extraction means)
12 first zone judgment unit
13 data storage unit (line composition means)
14 every zone judgment unit
15 change amount calculation unit (operator operation means)
16 identical position judgment/extraction unit

17    integration unit (integration means)
18    image generation unit (image generation means)
20    memory (a part of the image processing device for defect inspection, a part of the imaging device for defect inspection)
21    first memory unit
22    second memory unit
23    third memory unit
24    fourth memory unit
30    display unit

**Claims**

1.  An image processing device for defect inspection, which is configured to process image data of two-dimensional images of a specimen taken continually in time by an imaging unit in a state of relative movement between the specimen and the imaging unit, thereby to generate defect inspection image data for inspection of a defect in the specimen, the image processing device comprising:

    identical line extraction means which extracts line data of one line at an identical position on the image data from each of a plurality of different image data; and
    line composition means which arranges the line data extracted by the identical line extraction means, in time series to generate line-composited image data of a plurality of lines,
    wherein the identical line extraction means is means that extracts each of the line data at a plurality of different positions on the image data,
    wherein the line composition means is means that arranges the line data extracted by the identical line extraction means, in time series for each of the positions on the image data to generate a plurality of different line-composited image data,

    the image processing device further comprising:

    operator operation means which performs an operation using an operator to emphasize brightness change, on each of the plurality of line-composited image data to generate a plurality of emphasized image data of one line or a plurality of lines; and
    integration means which accumulates, at respective pixels, brightness values of the plurality of emphasized image data indicating an identical position of the specimen to generate the defect inspection image data.

2.  The device according to claim 1, wherein the operator operation means is means that performs an operation using a differential operator on the plurality of line-composited image data to calculate gradients of brightness values along a direction perpendicular to a center line, at respective pixels on the center line of the plurality of line-composited image data, and that replaces the brightness values of the respective pixels on the center line of the plurality of line-composited image data with absolute values of the gradients of brightness values at the respective pixels to generate new emphasized image data of one line.

3.  The device according to claim 1 or 2, wherein the integration means is means that accumulates the brightness values of the emphasized image data at respective pixels, for each of positions of the specimen from the plurality of emphasized image data indicating the respective positions of the specimen, to generate a plurality of defect inspection image data indicating the respective positions of the specimen,
    the device further comprising: image generation means which arranges the plurality of defect inspection image data indicating the respective positions of the specimen, corresponding to the positions of the specimen to composite new defect inspection image data.

4.  The device according to any one of claims 1 to 3, wherein the integration means accumulates, at respective pixels, the brightness values of the plurality of emphasized image data indicating the identical position of the specimen, for each of positions of the specimen in order from a leading position of the specimen, at every imaging by the imaging unit, to generate a plurality of defect inspection image data indicating the respective positions of the specimen.

5.  An imaging device for defect inspection comprising:

the device as set forth in any one of claims 1 to 4; and
an imaging unit which takes two-dimensional images of the specimen continually in time in a state of relative movement between the specimen and the imaging unit.

6. A defect inspection system for inspection of a defect in a specimen, comprising:

the device as set forth in claim 5; and
movement means which implements the relative movement between the specimen and the imaging unit.

7. The system according to claim 6 for inspection of the defect in the specimen by a dark field method, comprising:

a light source which illuminates the specimen with light; and
a light shield which blocks part of the light traveling toward the imaging unit after having been emitted from the light source and transmitted or reflected by the specimen.

8. An image processing program for defect inspection configured for operating the device as set forth in any one of claims 1 to 4, the program making a computer function as all of the aforementioned means.

9. A computer-readable recording medium storing the program as set forth in claim 8.

10. An image processing method for defect inspection, which is configured to process image data of two-dimensional images of a specimen taken continually in time by an imaging unit in a state of relative movement between the specimen and the imaging unit, thereby to generate defect inspection image data for inspection of a defect in the specimen, the image processing method comprising:

an identical line extraction step of extracting line data of one line at an identical position on the image data from each of a plurality of different image data; and
a line composition step of arranging the line data extracted in the identical line extraction step, in time series to generate composited image data of a plurality of lines,
wherein the identical line extraction step is a step of extracting each of the line data at a plurality of different positions on the image data,
wherein the line composition step is a step of arranging the line data extracted in the identical line extraction step, in time series for each of the positions on the image data to generate a plurality of different line-composited image data,

the image processing method further comprising:

an operator operation step of performing an operation using an operator to emphasize brightness change, on each of the plurality of line-composited image data to generate a plurality of emphasized image data of one line or a plurality of lines; and
an integration step of accumulating, at respective pixels, brightness values of the plurality of emphasized image data indicating an identical position of the specimen to generate the defect inspection image data.

*Fig.1*

EP 2 495 552 A1

*Fig.2*

(a)

(b)

# Fig.3

# Fig.4

(a)

Time-series Pictures

(b)

Extract Nth Line
from each picture →

Picture #1    Picture #2    · · ·    Picture #480

(c)

← Nth Line from picture #1
← Nth Line from picture #2
← Nth Line from picture #3

← Nth Line from picture #480

*Fig.5*

（a）

（b）

## Fig.6

(a)

(b)

(c)

# Fig.7

START

S10 — FRAME NUMBER i=1

S20 — SAVE IMAGE OF SPECIMEN TAKEN BY AREA CAMERA

S32 — i ≧ 2? — NO
S3k — i ≧ k? — NO

S41 — EXTRACT PRESCRIBED LINE DATA BY FIRST EXTRACTION PART

S42 — YES — EXTRACT LINE DATA ADJACENT IN MOVING DIRECTION TO PRESCRIBED LINE DATA BY SECOND EXTRACTION PART

S4k — YES — EXTRACT KTH LINE DATA IN MOVING DIRECTION FROM PRESCRIBED LINE DATA BY KTH EXTRACTION PART

S51 — IS THERE ANY DATA IN FIRST ZONE OF FIRST REGION IN SECOND MEMORY UNIT? — NO

S52 — IS THERE ANY DATA IN FIRST ZONE OF SECOND REGION IN SECOND MEMORY UNIT? — NO

S5k — IS THERE ANY DATA IN FIRST ZONE OF KTH REGION IN SECOND MEMORY UNIT? — NO

S61 — YES — MOVE STORAGE PLACES OF DATA STORED IN FIRST REGION, EACH BY ONE ZONE

S62 — YES — MOVE STORAGE PLACES OF DATA STORED IN SECOND REGION, EACH BY ONE ZONE

S6k — YES — MOVE STORAGE PLACES OF DATA STORED IN KTH REGION, EACH BY ONE ZONE

S71 — STORE EXTRACTED LINE DATA INTO FIRST ZONE OF FIRST REGION

S72 — STORE EXTRACTED LINE DATA INTO FIRST ZONE OF SECOND REGION

S7k — STORE EXTRACTED LINE DATA INTO FIRST ZONE OF KTH REGION

S81 — ARE THERE DATA STORED IN ALL ZONES OF FIRST REGION? — NO

S82 — ARE THERE DATA STORED IN ALL ZONES OF SECOND REGION? — NO

S8k — ARE THERE DATA STORED IN ALL ZONES OF KTH REGION? — NO

S91 — YES — PERFORM DIFFERENTIAL OPERATOR OPERATION ON A PLURALITY OF LINE DATA STORED IN FIRST REGION

S92 — YES — PERFORM DIFFERENTIAL OPERATOR OPERATION ON A PLURALITY OF LINE DATA STORED IN SECOND REGION

S9k — YES — PERFORM DIFFERENTIAL OPERATOR OPERATION ON A PLURALITY OF LINE DATA STORED IN KTH REGION

S100 — ARE THERE DATA OF ALL IMAGING ANGLES INDICATING IDENTICAL POSITION, IN THIRD MEMORY UNIT? — NO

S110 — YES — ACCUMULATE ABSOLUTE VALUES OF DATA OF ALL IMAGING ANGLES INDICATING IDENTICAL POSITION, WHICH ARE STORED IN THIRD MEMORY UNIT

S120 — ARRANGE DATA ACCUMULATED BY INTEGRATION UNIT, TO COMPOSITE IMAGE DATA

S130 — DISPLAY IMAGE

S140 — FRAME NUMBER i=i+1

# Fig.8a

FRAME NUMBER → t

| | i=1 | i=2 | i=3 | i=4 | i=5 | i=6 | i=7 | i=8 | i=9 | i=10 |
|---|---|---|---|---|---|---|---|---|---|---|

**FIRST MEMORY UNIT 21** — 410

| | 301 | 302 | 303 | 304 | 305 | 306 | 307 | 308 | 309 | 310 |
|---|---|---|---|---|---|---|---|---|---|---|
| 9TH LINE | | | | | | | | | p1 | p2 |
| 8TH LINE | | | | | | | | p1 | p2 | p3 |
| 7TH LINE | | | | | | | p1 | p2 | p3 | p4 |
| 6TH LINE | | | | | | p1 | p2 | p3 | p4 | p5 |
| 5TH LINE | | | | | p1 | p2 | p3 | p4 | p5 | p6 |
| 4TH LINE | | | | p1 | p2 | p3 | p4 | p5 | p6 | p7 |
| 3RD LINE | | | p1-C | p2-C | p3-C | p4-C | p5-C | p6-C | p7-C | p8-C |
| 2ND LINE | | p1-B | p2-B | p3-B | p4-B | p5-B | p6-B | p7-B | p8-B | p9-B |
| 1ST LINE | p1-A | p2-A | p3-A | p4-A | p5-A | p6-A | p7-A | p8-A | p9-A | p10-A |

**SECOND MEMORY UNIT 22** — 420

FIRST REGION — 421

| | 311 | 312 | 313 | 314 | 315 | 316 | 317 | 318 | 319 | 320 |
|---|---|---|---|---|---|---|---|---|---|---|
| 5TH ZONE | | | | | p1-A | p2-A | p3-A | p4-A | p5-A | p6-A |
| 4TH ZONE | | | | p1-A | p2-A | p3-A | p4-A | p5-A | p6-A | p7-A |
| 3RD ZONE | | | p1-A | p2-A | p3-A | p4-A | p5-A | p6-A | p7-A | p8-A |
| 2ND ZONE | | p1-A | p2-A | p3-A | p4-A | p5-A | p6-A | p7-A | p8-A | p9-A |
| 1ST ZONE | p1-A | p2-A | p3-A | p4-A | p5-A | p6-A | p7-A | p8-A | p9-A | p10-A |

SECOND REGION — 422

| | 321 | 322 | 323 | 324 | 325 | 326 | 327 | 328 | 329 | 330 |
|---|---|---|---|---|---|---|---|---|---|---|
| | | | | | p1-B | p2-B | p3-B | p4-B | p5-B | p6-B |
| | | | | p1-B | p2-B | p3-B | p4-B | p5-B | p6-B | p7-B |
| | | | p1-B | p2-B | p3-B | p4-B | p5-B | p6-B | p7-B | p8-B |
| | | p1-B | p2-B | p3-B | p4-B | p5-B | p6-B | p7-B | p8-B | p9-B |

3RD REGION — 423

| | 331 | 332 | 333 | 334 | 335 | 336 | 337 | 338 | 339 | 340 |
|---|---|---|---|---|---|---|---|---|---|---|
| | | | | | | p1-C | p2-C | p3-C | p4-C |
| | | | | | p1-C | p2-C | p3-C | p4-C | p5-C |
| | | | | p1-C | p2-C | p3-C | p4-C | p5-C | p6-C |
| | | | p1-C | p2-C | p3-C | p4-C | p5-C | p6-C | p7-C |
| | | p1-C | p2-C | p3-C | p4-C | p5-C | p6-C | p7-C | p8-C |

**THIRD MEMORY UNIT 23** — 430

- 341: p3-A
- 342: p3-A / 343: p3-B
- 345: p3-A / 346: p3-B / 347: p3-C
- 351: p4-A / 352: p4-B / 353: p4-C
- p5-A / p5-B / p5-C
- p6-A / p6-B / p6-C
- 344: p4-A
- 348: p4-A / 349: p4-B
- 354: p5-A / 355: p5-B
- p6-A / p6-B
- p7-A / p7-B
- 350: p5-A
- 356: p6-A
- p7-A
- p8-A

**FOURTH MEMORY UNIT 24** — 440

- 361: p3
- 362: p3 / 363: p4
- p3 / p4 / p5
- p3 / p4 / p5 / p6

**DISPLAY UNIT 30** — 450

- 381: p3
- 382: p3 / p4
- p3 / p4 / p5
- p3 / p4 / p5 / p6

# Fig.8b

401

400

| p1 |
|----|
| p2 |
| p3 |
| p4 |
| p5 |
| p6 |
| p7 |
| p8 |
| p9 |
| p10 |
| p11 |
| p12 |
| ⋮ |

# Fig.8c

FRAME
NUMBER

i=1

301

p1-A

i=2

302

p1-B
p2-A

i=3

303

p1-C
p2-B
p3-A

i=4

304

p2-C
p3-B
p4-A

i=5 (m)

305        315        $\times\,a_1$
           $\times\,a_2$        341 (342, 345)
p3-C        :        $=$
p4-B
p5-A        $\times\,a_m$

i=6

306        326        $\times\,a_1$
           $\times\,a_2$        343 (346)
p4-C        :        $=$
p5-B
           $\times\,a_m$

i=7 (m+k-1)

307        337        $\times\,a_1$
           $\times\,a_2$        347        RT-LCI DATA
p5-C        :        $=$                    361
           $\times\,a_m$                    17

$\vdots$

t

# *Fig.9*

461

| | | | |
|---|---|---|---|
| 98 | 110 | 99 | 110 |
| 99 | 109 | 102 | 108 |
| 100 | 108 | 100 | 106 |
| 101 | 107 | 98 | 104 |
| 102 | 106 | 101 | 102 |

462

| | |
|---|---|
| | −2 |
| | −1 |
| | 0 |
| | 1 |
| | 2 |

463

| | | | |
|---|---|---|---|
| 10 | −10 | 0 | −22 |

464

| | | | |
|---|---|---|---|
| 10 | 10 | 0 | 22 |

# Fig.10

(a)

TRANSMISSION
SCATTERING

501
502
504
503

(b)

TRANSMISSION
SCATTERING

501
502
503
504

(c)

REFLECTION
SCATTERING

504
503
501
502

# *Fig.11*

(a)

(b)

(c)

## Fig.12

(a)

(b)

(c)

## Fig.13

(a)

(b)

(c)

# Fig.14

(a)

(b)

(c)

# Fig.15

(a)
**REGULAR TRANSMISSION (BRIGHT FIELD)**

(b)
**TRANSMISSION SCATTERING (DARK FIELD)**

(c)
**REGULAR REFLECTION (BRIGHT FIELD)**

(d)
**REFLECTION SCATTERING (DARK FIELD)**

## INTERNATIONAL SEARCH REPORT

| International application No. |
|---|
| PCT/JP2010/066934 |

A.  CLASSIFICATION OF SUBJECT MATTER
*G01N21/892*(2006.01)i

According to International Patent Classification (IPC) or to both national classification and IPC

B.  FIELDS SEARCHED

Minimum documentation searched (classification system followed by classification symbols)
G01N21/84-21/958; G01B11/00-11/30, G01M11/00-11/08; G06T1/00-5/50;
9/00-9/40

Documentation searched other than minimum documentation to the extent that such documents are included in the fields searched
    Jitsuyo Shinan Koho        1922-1996    Jitsuyo Shinan Toroku Koho    1996-2010
    Kokai Jitsuyo Shinan Koho    1971-2010    Toroku Jitsuyo Shinan Koho    1994-2010

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2008-256402 A  (Purex Corp.),<br>23 October 2008 (23.10.2008),<br>entire text; all drawings<br>& US 2010/0110173 A    & EP 2141487 A1<br>& WO 2008/120400 A1 | 1-10 |
| A | JP 2005-181014 A  (Hitachi Software Engineering Co., Ltd.),<br>07 July 2005 (07.07.2005),<br>entire text; all drawings<br>& US 2005/0135696 A1    & EP 1545119 A1 | 1-10 |
| A | JP 2003-250078 A  (Nippon Telegraph And Telephone Corp.),<br>05 September 2003 (05.09.2003),<br>entire text; all drawings<br>(Family: none) | 1-10 |

☐    Further documents are listed in the continuation of Box C.    ☐    See patent family annex.

| | |
|---|---|
| *     Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br>    16 December, 2010 (16.12.10) | Date of mailing of the international search report<br>    28 December, 2010 (28.12.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007333563 A

- JP 2008292171 A